# EUROPÄISCHE PATENTSCHRIFT

(11) **EP 4 100 180 B1**
(45) Veröffentlichungstag und Bekanntmachung des Hinweises auf die Patenterteilung: **11.11.2026**
(21) Anmeldenummer: 21701832.4
(22) Anmeldetag: 02.02.2021
(51) Int. Cl.: B21B 37/00, G05B 19/409, G05B 19/418, G06F 16/9032, G05B 23/02

(54) **VORRICHTUNG ZUR STEUERUNG UND/ODER ZUR ÜBERWACHUNG EINER TECHNISCHEN ANLAGE**
METHOD FOR CONTROLLING AND/OR OPERATING A TECHNICAL SYSTEM
DISPOSITIF DE COMMANDE ET/OU DE SURVEILLANCE D'UNE INSTALLATION TECHNIQUE

(30) Priorität: 06.02.2020 EP 20155893
(43) Veröffentlichungstag der Anmeldung: 14.12.2022
(73) Patentinhaber: Primetals Technologies Germany GmbH, 91058 Erlangen (DE)
(72) Erfinder: KERSCHENSTEINER, Martin, 92348 Berg (DE); THEKALE, Alexander, 91058 Erlangen (DE)
(74) Vertreter: Metals@Linz
(86) Internationale Anmeldenummer: PCT/EP2021/052413
(87) Internationale Veröffentlichungsnummer: WO 2021/156241

(56) Entgegenhaltungen:
- US-A1- 2017 346 768
- US-A1- 2018 231 954

## Beschreibung

Die Erfindung betrifft eine Vorrichtung zur Steuerung und/oder zur Überwachung einer technischen Anlage zur Metallerzeugung und/oder Metallverarbeitung und ein Verfahren zur Steuerung und/oder zur Überwachung einer technischen Anlage zur Metallerzeugung und/oder Metallverarbeitung.

Aus EP 3 293 594 A1 ist eine Vorrichtung und ein Verfahren zur Steuerung und/oder zur Überwachung einer technischen Anlage zur Metallerzeugung und/oder Metallverarbeitung bekannt.

US 20170346768 beschreibt ein Konversationsschnittstellensystem, das den Fernzugriff auf Informationen zu Fertigungsvorgängen über den Austausch von Nachrichten in einfacher Sprache ermöglicht. Ein Cloud-basierter Konversationsschnittstellendienst ist mit einer Instant-Messaging-Anwendung verbunden und empfängt Klartextabfragen von der Schnittstelle der Instant-Messaging-Anwendung, die Informationen zu einem oder mehreren industriellen Systemen anfordert. Das Cloud-basierte System synchronisiert die Abfragen mit einem oder mehreren Agentengeräten für Konversationsschnittstellen vor Ort, die sich in einer oder mehreren Anlagen befinden. Die Vor-Ort-Agentengeräte übersetzen die Abfragen und wenden die übersetzten Abfragen auf lokale Quellen von Fertigungsbetriebsdaten an. Die Vor-Ort-Agentengeräte generieren dann Antwortnachrichten. Das Cloud-basierte System leitet die Antwortnachrichten über die Instant-Messaging-Schnittstelle an die Absender der Abfragen weiter.

US 20180231954 A1 beschreibt ein Verfahren zum Empfang einer Textnachricht von einem Client-Gerät. Die Textnachricht enthält eine Anfrage nach Informationen eines industriellen Prozesssteuerungs- und Automatisierungssystem. Das Verfahren umfasst auch das Auswerten der Textnachricht, um die angeforderten Informationen zu identifizieren. Das Verfahren umfasst ferner das Übertragen einer oder mehrerer Abfragen nach den angeforderten Informationen und das Erhalten der angeforderten Informationen. Darüber hinaus umfasst das Verfahren das Erzeugen einer natürlich sprachlichen Antwort, die die angeforderten Informationen enthält, und das Übertragen der natürlich sprachlichen Antwort zur Übermittlung an das Client-Gerät.

Die Aufgabe der Erfindung besteht darin, eine verbesserte Vorrichtung und ein verbessertes Verfahren zur Steuerung und/oder zur Überwachung einer technischen Anlage zur Metallerzeugung und/oder Metallverarbeitung bereitzustellen.

Die Aufgaben der Erfindung werden durch die unabhängigen Patentansprüche gelöst.

Vorteilhafte Ausführungsformen der Vorrichtung und des Verfahrens sind in den abhängigen Ansprüchen angegeben.

Es wird eine Vorrichtung nach Anspruch 1 vorgeschlagen. Die Vorrichtung weist ein Rechensystem mit wenigstens einer Schnittstelle zum Verbinden mit wenigstens einem weiteren Rechensystem der Anlage und/oder wenigstens einer Sensorvorrichtung der Anlage und/oder mit wenigstens einer Mensch-Maschine-Schnittstelle und/oder mit wenigstens einem Anwendungsprogramm auf. Das Rechensystem ist ausgebildet, um über die Schnittstelle eine Anfrage über eine Information über die Anlage von wenigstens einem anfragenden weiteren Rechensystem und/oder von einer anfragenden Sensorvorrichtung der Anlage und/oder oder von einer anfragenden Mensch-Maschine-Schnittstelle und/oder von einem Anwendungsprogramm zu erhalten. Das Rechensystem kann auf ein Datenmodell über das weitere Rechensystem und/oder die Sensorvorrichtung und/oder die Mensch-Maschine-Schnittstelle und/oder ein weiteres Anwendungsprogramm zugreifen, wobei das Datenmodell einen Hinweis darauf gibt, auf welche Informationen das weitere Rechensystem und/oder die Sensorvorrichtung und/oder die Mensch-Maschine-Schnittstelle und/oder das weitere Anwendungsprogramm zugreifen können. Das Rechensystem ist ausgebildet, um anhand des Datenmodells das weitere Rechensystem und/oder die Sensorvorrichtung und/oder die Mensch-Maschine-Schnittstelle und/oder das weitere Anwendungsprogramm zu ermitteln, die die gesuchte Information liefern können.

Zudem ist das Rechensystem ausgebildet, um über die Schnittstelle die angefragte Information von dem wenigstens einen ermittelten weiteren Rechensystem und/oder von der wenigstens einen ermittelten Sensorvorrichtung und/oder von der wenigstens einen ermittelten Mensch-Maschine-Schnittstelle einzuholen. Weiterhin ist das Rechensystem ausgebildet ist, um die eingeholte Information über die Schnittstelle an das anfragende weitere Rechensystem und/oder an die anfragende Sensorvorrichtung der Anlage und/oder an die anfragende Mensch-Maschine-Schnittstelle und/oder an das anfragende Anwendungsprogramm auszugeben. Die eingeholte Information kann insbesondere von einem der Rechensysteme verwendet werden, um in die Steuerung einer Funktion der Anlage einzugreifen und die Steuerung zu ändern. Beispielsweise kann das Rechensystem, das die Anlagenautomatisierung ausführt, die eingeholte Information verwenden, um die Steuerung der Anlage zu ändern.

Insbesondere mithilfe des verwendeten Datenmodells kann die mit der Anfrage gesuchte Information schneller, einfacher und insbesondere passender gefunden werden, da zuerst ermittelt wird, wie die Anfrage am besten ausgeführt wird, d.h. von welcher Quelle oder von welchen Quellen die gesuchte Information insbesondere mit größerer Wahrscheinlichkeit geliefert werden kann. Erst nach Ermittlung des weiteren Rechensystems und/oder der Sensorvorrichtung und/oder der Mensch-Maschine-Schnittstelle und/oder des weiteren Anwendungsprogrammes, das die gesuchte Information liefern kann, wird die Anfrage über das ermittelte weitere Rechensystem und/oder die ermittelte Sensorvorrichtung und/oder die ermittelte Mensch-Maschine-Schnittstelle und/oder das ermittelte weitere Anwendungsprogramm ausgeführt. Das Rechensystem ist ausgebildet, um anhand des Datenmodells festzustellen, mit welcher Wahrscheinlichkeit das weitere Rechensystem und/oder die Sensorvorrichtung und/oder die Mensch-Maschine-Schnittstelle und/oder das weitere Anwendungsprogramm die gesuchte Information liefern kann.

Das Datenmodell weist für die weiteren Rechensysteme und/oder Sensorvorrichtungen und/oder Mensch-Maschine-Schnittstellen und/oder die weiteren Anwendungsprogramme festgelegte Beispiele für Suchanfragen auf, mit denen nach Informationen in den weiteren Rechensystemen und/oder den Sensorvorrichtungen und/oder den Mensch-Maschine-Schnittstellen gesucht werden kann.

Das Rechensystem gibt die Anfrage an das ermittelte weitere Rechensystem und/oder an die ermittelte Sensorvorrichtung und/oder an die ermittelte Mensch-Maschine-Schnittstelle und/oder an das ermittelte Anwendungsprogramm weiter, das die höchste Wahrscheinlichkeit aufweist.

Das Datenmodell ist als trainiertes neuronales Netz ausgebildet, wobei das neuronale Netz ausgebildet ist, um das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können, wobei das neuronale Netz mithilfe eines überwachten Lernverfahrens mit vorgegebenen Beispielen trainiert worden ist, um anhand einer Anfrage das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können, wobei die Beispiele ähnlich oder identisch zu den Anfragen ausgebildet sind.

Auf diese Weise wird eine modulare Vorrichtung bereitgestellt, die es ermöglicht, auf einfache Weise Informationen und/oder Daten und/oder Wissen von weiteren Rechensystemen der Anlage und/oder von Sensorvorrichtungen der Anlage und/oder von Mensch-Maschine-Schnittstellen und/oder weiteren Anwendungsprogrammen zu ermitteln. Dazu ist es nicht erforderlich, dass die Informationen und/oder das Wissen zentral in einem Rechensystem gebündelt sind. Über die Verbindung des Rechensystems mit weiteren Rechensystemen und/oder Sensorvorrichtungen der Anlage und/oder Mensch-Maschine-Schnittstellen ist es möglich, Informationen und/oder Wissen über die gesamte Anlage einzuholen und an Mensch-Maschine-Schnittstellen und/oder an weitere Rechensysteme und/oder an Sensorvorrichtungen und/oder Anwendungsprogrammen weiterzugeben und/oder weiter zu verarbeiten.

Auf diese Weise kann die Anlage flexibel mit weiteren Rechensystemen, Sensorvorrichtungen und/oder Mensch-Maschine-Schnittstellen und/oder Anwendungsprogrammen ergänzt werden oder weitere Rechensysteme, Sensorvorrichtungen und/oder Mensch-Maschine-Schnittstellen und/oder Anwendungsprogramme der Anlage können ausgetauscht werden, ohne dass es erforderlich ist, in einem zentralen Rechensystem entsprechende Daten oder Informationen zu löschen oder zu ändern. Da zur Ermittlung der Daten auf die weiteren Rechensysteme und/oder Sensorvorrichtungen und/oder Mensch-Maschine-Schnittstellen und/oder weitere Anwendungsprogramme zugegriffen werden kann, kann auf ein Daten-Update in einem zentralen Rechensystem verzichtet werden. Zudem ist es auf diese Weise möglich, Informationen der weiteren Rechensysteme, Sensorvorrichtungen und/oder Mensch-Maschine-Schnittstellen und/oder Anwendungsprogramme abhängig von vorgegebenen Randbedingungen für einen Zugriff freizugeben oder nicht. Weiterhin ist es durch das vorgeschlagene modulare System möglich, Informationen, Daten und Wissen der einzelnen weiteren Rechensysteme, Sensorvorrichtungen und/oder Mensch-Maschine-Schnittstellen und/oder Anwendungsprogramme getrennt zu halten und nur bestimmte Informationen, Daten, Steuerdaten und/oder technisches Wissen der einzelnen weiteren Rechensysteme, Sensorvorrichtungen und/oder Mensch-Maschine-Schnittstellen und/oder Anwendungsprogramme an das Rechensystem weiterzugeben. Somit wird ein Vermischen der Informationen, Daten, Steuerdaten und/oder des technischen Wissens der weiteren Rechensysteme, Sensorvorrichtungen und/oder Mensch-Maschine-Schnittstellen und/oder Anwendungsprogramme vermieden. Zudem ermöglicht dieser modulare Ansatz einen besseren Überblick und eine Abtrennung der Funktionen der weiteren Rechensysteme, Sensorvorrichtungen und/oder Mensch-Maschine-Schnittstellen. Dies ist insbesondere bei einer Suche nach einer Fehlfunktion der Anlage von Vorteil, da der Datenaustausch zwischen den weiteren Rechensystemen, Sensorvorrichtungen und/oder Mensch-Maschine-Schnittstellen und/oder Anwendungsprogrammen das Auffinden einer Fehlfunktion der technischen Anlage vereinfacht.

Eine Information kann beispielsweise einen Betriebszustand wenigstens einer Teilanlage der Anlage, oder einen Betriebszustand der Anlage darstellen. Zudem kann eine Information ein Steuerwert der Anlage darstellen, mit dem die Anlage von dem Rechensystem oder einem weiteren Rechensystem angesteuert wird. In einer Ausführungsform kann die Information auf Kameradaten basieren, die einen Bereich der Anlage optisch erfassen. Somit kann die Information wenigstens ein Bild eines Teils der Anlage oder eine Videosequenz, die einen Teil der Anlage zeigt, darstellen. Die Information basierend auf Kameradaten, insbesondere ein Bild, ermöglicht beispielsweise eine optische Auswertung eines Betriebszustandes der Anlage, wobei bei der Auswertung der Kameradaten eine künstliche Intelligenz eingesetzt werden kann. Zudem stellt beispielsweise ein Bild oder eine Videosequenz eine für eine Bedienperson schnell und einfach erfassbare Information dar, die sich zur Beurteilung des Betriebszustandes der Anlage oder zur Beurteilung einer Steuergröße der Anlage gut eignet. Das Ergebnis der Analyse kann auch von dem Rechensystem oder einem weiteren Rechensystem verwendet werden, um Steuerdaten für die Anlage zu ändern. Somit wird die Bedienbarkeit und Steuerung der technischen Anlage sowohl für die Bedienperson als auch für die Rechensysteme vereinfacht.

In einer Ausführungsform ist das Rechensystem ausgebildet, um die eingeholte Information in Form von wenigstens einem Bild oder einer Videosequenz auszugeben, insbesondere an die Mensch-Maschine-Schnittstelle auszugeben. Beispielsweise kann die Mensch-Maschine-Schnittstelle wenigstens einen Bildschirm oder mehrere Bildschirme aufweisen. Zudem kann abhängig von einer Einstellung durch eine Bedienperson eine gewünschte Information in Form eines Bildes auf einem Bildschirm oder auf mehreren Bildschirmen dargestellt werden. Die Auswahl der Informationen, die über die Mensch-Maschine-Schnittstelle ausgegeben wird, kann von einer Bedienperson oder automatisch von dem Rechensystem abhängig von Betriebsparametern oder Betriebszuständen der Anlage und/oder abhängig von Steuerdaten der Anlage festgelegt werden. Dadurch wird eine optimierte Auswahl der ausgegebenen bzw. dargestellten Information über die Mensch-Maschine-Schnittstelle erreicht. Somit kann mit wenigen Bildschirmen, insbesondere mit nur einem Bildschirm die für den jeweiligen Betriebszustand oder das jeweilige Steuerdatum wesentliche Information dargestellt oder ausgegeben werden. Somit können Bildschirme eingespart werden und/oder eine verbesserte Informationsdarstellung oder Informationsausgabe erreicht werden. Über die Mensch-Maschine-Schnittstelle können nicht nur Bilder, sondern auch Daten, Betriebszustände, Steuerdaten usw. dargestellt werden.

In einer Ausführungsform ist das Rechensystem ausgebildet, um aus der Anfrage die mit der Anfrage gesuchte Information zu ermitteln. Das Rechensystem ist zudem ausgebildet ist, um festzustellen, welches weitere Rechensystem und/oder welche Sensorvorrichtung und/oder welche Mensch-Maschine-Schnittstelle und/oder welches weitere Anwendungsprogramm die gesuchte Information liefern kann. Dabei kann das Rechensystem z.B. eine Wahrscheinlichkeit ermitteln, mit der das weitere Rechensystem und/oder die Sensorvorrichtung und/oder die Mensch-Maschine-Schnittstelle und/oder das weitere Anwendungsprogramm die gesuchte Information liefern kann. In der Regel gibt das Rechensystem die Anfrage an das weitere Rechensystem und/oder die Sensorvorrichtung und/oder die Mensch-Maschine-Schnittstelle und/oder das weitere Anwendungsprogramm weiter, das die höchste Wahrscheinlichkeit aufweist. Dadurch wird der Aufwand für eine erfolgreiche Suche reduziert. Beispielsweise kann das Rechensystem ausgebildet sein, um anhand des Datenmodells Wahrscheinlichkeiten zu ermitteln, mit denen die weiteren Rechensysteme und/oder die Sensorvorrichtungen und/oder die Mensch-Maschine-Schnittstellen und/oder die weiteren Anwendungsprogramme die mit der Anfrage gesuchte Information ermitteln können. Dazu kann das Rechensystem beispielsweise auf ein trainiertes neuronales Netz verwenden.

In einer weiteren Ausführung ist das Rechensystem ausgebildet, um über ein NLU Programm aus einer in Textform vorliegenden Anfrage die durch die Anfrage gesuchte Information zu ermitteln.

In einer Ausführungsform weist das Datenmodell für die weiteren Rechensysteme und/oder die Sensorvorrichtungen und/oder die Mensch-Maschine-Schnittstellen und/oder das weitere Anwendungsprogramm festgelegte Beispiele, insbesondere Beispielsätze, für Anfragen auf, mit denen nach Informationen in den weiteren Rechensystemen und/oder in den Sensorvorrichtungen und/oder in den Mensch-Maschine-Schnittstellen und/oder weiteren Anwendungsprogrammen erfolgreich gesucht werden kann. Die Beispiele können anstatt eines Beispielsatzes auch nur ein einzelnes Wort und/oder eine Grafik und/oder ein Tonsignal und/oder ein Sprachsignal und/oder ein Bild umfassen. Abhängig von der gewählten Ausführung kann die Anfrage einen Text in Form eines Wortes oder mehrerer Worte, insbesondere in Form eines Satzes und/oder in Form einer Grafik und/oder in Form eines Tonsignals und/oder in Form eines Sprachsignals und/oder in Form eines Bildes ausgebildet sein.

Das Rechensystem ermittelt durch einen Vergleich der festgelegten Beispiele, insbesondere Beispielsätze, mit der Anfrage, insbesondere unter Berücksichtigung der mit der Anfrage gesuchten Information, welche weiteren Rechensysteme und/oder welche Sensorvorrichtungen und/oder welche Mensch-Maschine-Schnittstellen und/oder welches weitere Anwendungsprogramm die mit der Anfrage gesuchte Information liefern können. Zudem kann das Rechensystem ermitteln, mit welcher Wahrscheinlichkeit welches weitere Rechensystem und/oder welche Sensorvorrichtung und/oder welche Mensch-Maschine-Schnittstelle die gesuchte Information liefern kann.

In einer Ausführung empfängt das Rechensystem als Antwort auf eine übermittelte Anfrage nach einer Information von dem angefragten weiteren Rechensystem und/oder Sensorvorrichtung und/oder Mensch-Maschine-Schnittstelle und/oder weiteren Anwendungsprogramm eine weitere Anfrage nach einer weiteren Information über die Anlage. Das Rechensystem ermittelt anhand der weiteren Anfrage, welches weitere Rechensystem und/oder welche Sensorvorrichtung und/oder welche Mensch-Maschine-Schnittstelle und/oder welches weitere Anwendungsprogramm die weitere Anfrage beantworten kann. Das Rechensystem ist ausgebildet, um über die Schnittstelle die angefragte weitere Information von dem wenigstens einen ermittelten weiteren Rechensystem und/oder von der wenigstens einen ermittelten Sensorvorrichtung und/oder von der wenigstens einen ermittelten Mensch-Maschine-Schnittstelle und/oder dem wenigstens einen weiteren Anwendungsprogramm einzuholen. Das Rechensystem gibt die eingeholte weitere Information über die Schnittstelle an das anfragende weitere Rechensystem und/oder an die anfragende Sensorvorrichtung der Anlage und/oder an die anfragende Mensch-Maschine-Schnittstelle und/oder an das anfragende Anwendungsprogramm aus. Somit kann eine Information beispielsweise von mehreren weiteren Rechensystemen und/oder Sensorvorrichtungen und/oder Mensch-Maschine-Schnittstellen und/oder weiteren Anwendungsprogrammen zusammen ermittelt und an das Rechensystem übermittelt werden.

In einer weiteren Ausführung ist das Rechensystem ausgebildet, um abhängig von wenigstens einem vorgegebenen Betriebszustand der Anlage und/oder einem vorgegebenen Steuerwert für die Anlage eine festgelegte Information über die Schnittstelle von wenigstens einem weiteren Rechensystem und/oder einer Sensorvorrichtung und/oder von einer Mensch-Maschine-Schnittstelle und/oder von einem weiteren Anwendungsprogramm einzuholen. Das Rechensystem kann die selbständig eingeholte Information über die Schnittstelle an ein weiteres Rechensystem und/oder an eine Sensorvorrichtung und/oder an eine Mensch-Maschine-Schnittstelle und/oder an das Anwendungsprogramm ausgeben.

Beispielsweise können abhängig von festgelegten Situationen wie z.B. vorgegebenen Störungen der Anlage automatisch gewünschte Informationen, Daten und/oder Bilder ermittelt werden und an weitere Rechensysteme und/oder Sensorvorrichtungen und/oder Mensch-Maschine-Schnittstellen und/oder Anwendungsprogramme ausgegeben werden. Somit wird automatisch für festgelegte Situationen eine Anpassung der ermittelten und der zur Verfügung gestellten Informationen erreicht. Durch die automatische Anpassung der Informationen wird eine verbesserte Steuerung und/oder Überwachung der Anlage mithilfe der weiteren Rechensysteme und/oder mithilfe einer Bedienperson über die Mensch-Maschine-Schnittstelle und/oder mithilfe der Steuervorrichtungen und/oder mithilfe der Anwendungsprogramme erreicht.

Abhängig von der gewählten Ausführungsform kann beispielsweise durch eine Bedienperson festgelegt werden, bei welchen Betriebszuständen und/oder bei welchen vorgegebenen Steuerwerten welche festgelegte Information über die erste Schnittstelle von wenigstens einem weiteren Rechensystem und/oder wenigstens einer Sensorvorrichtung und/oder einer Mensch-Maschine-Schnittstelle und/oder einem Anwendungsprogramm eingeholt wird, und an welches weitere Rechensystem und/oder welche Sensorvorrichtung und/oder welche Mensch-Maschine-Schnittstelle und/oder welches Anwendungsprogramm die eingeholte Information übermittelt wird. Somit kann die Informationsgewinnung und der Informationsfluss beispielsweise durch eine Bedienperson konfiguriert werden. Dazu weisen die Mensch-Maschine-Schnittstellen entsprechende Eingabemittel auf. Auf diese Weise kann die Überwachung und Steuerung der Anlage und insbesondere die Mensch-Maschine-Schnittstelle individuell angepasst werden.

In einer weiteren Ausführungsform ist das Rechensystem ausgebildet, um eine Anfrage in Form einer akustischen Anfrage, insbesondere in Form einer Sprachanfrage, in einen Text umsetzen zu können und den Text als Anfrage weiter zu verarbeiten. Durch die Umsetzung der akustischen Anfrage in den Text, der einen Programmbefehl darstellen kann, kann die in der akustischen Anfrage gewünschte Information über die Schnittstellen gesucht und eingeholt werden. Auf diese Weise wird eine vereinfachte Steuerung und Überwachung der Vorrichtung ermöglicht. Weiterhin ist das Rechensystem ausgebildet, um die über die erste Schnittstelle eingeholte Information über die erste Schnittstelle an ein weiteres Rechensystem und/oder eine Sensorvorrichtung und/oder ein Anwendungsprogramm und/oder über die zweite Schnittstelle an die Mensch-Maschine-Schnittstelle auszugeben. Beispielsweise weist die Mensch-Maschine-Schnittstelle ein Mikrofon für eine Spracheingabe auf. Zudem kann das Rechensystem über einen Datenspeicher verfügen, in dem abgespeicherte akustische Sprachbefehle festgelegten Programmbefehlen zugeordnet sind. Auf diese Weise wird die Umsetzung der akustischen Anfrage in Programmbefehle der Rechensysteme vereinfacht. Dabei kann das akustische Sprachsignal, d.h. die Sprache, zuerst in einen Text und anschließend der Text in einen Programmbefehl für ein Programm, insbesondere für ein Programm eines Rechensystems oder eines weiteren Rechensystems umgewandelt werden. Das Programm kann z.B. als Anwendungsprogramm oder als Assistentenprogramm ausgebildet sein.

In einer weiteren Ausführungsform ist das Rechensystem ausgebildet, um wenigstens zu festgelegten Zeitpunkten, insbesondere kontinuierlich, einen Betriebszustand der Anlage und/oder eine Produktionsqualität der Anlage und/oder einen Wartungszustand der Anlage zu erfassen und abzuspeichern. In einer weiteren Ausführungsform ist das Rechensystem ausgebildet, um Betriebszustände der Anlage und/oder Produktionsqualitäten der Anlage und/oder Wartungszustände der Anlage, die zu verschiedenen Zeiten erfasst wurden, weiter zu verarbeiten oder miteinander zu vergleichen. Zudem kann abhängig von der gewählten Ausführungsform der erfasste Betriebszustand der Anlage und/oder die erfasste Produktionsqualität der Anlage und/oder der erfasste Wartungszustand der Anlage über die erste Schnittstelle einem weiteren Rechensystem und/oder einer Sensorvorrichtung und/oder einem Anwendungsprogramm und/oder über die zweite Schnittstelle an die Mensch-Maschine-Schnittstelle ausgegeben werden. Somit können automatisch die weiteren Rechensysteme und/oder Sensorvorrichtungen und/oder eine Mensch-Maschine-Schnittstelle und damit eine Bedienperson über wesentliche Parameter der Anlage informiert werden.

In einer weiteren Ausführungsform ist das Rechensystem ausgebildet, um die erfassten Betriebszustände und/oder Produktionsqualitäten und/oder Wartungszustände zu analysieren. Beispielsweise können Betriebszustände der Anlage, die zu verschiedenen Zeiten erfasst wurden, miteinander vergleichen werden. Beispielsweise können Produktqualitäten der Anlage, die zu verschiedenen Zeiten erfasst wurden, miteinander vergleichen werden. Beispielsweise können Wartungszustände der Anlage, die zu verschiedenen Zeiten erfasst wurden, miteinander vergleichen werden. Dabei können beispielsweise Datenbanken, abgespeicherte Auswerteverfahren, künstliche Intelligenzen usw. verwendet werden. Mithilfe der Analyse können zusätzliche Informationen über die Anlage und/oder Handlungsempfehlungen ermittelt und an die weiteren Rechensysteme und/oder die Sensorvorrichtungen und/oder die Mensch-Maschine-Schnittstelle und/oder Anwendungsprogramme ausgegeben werden. Weiterhin können die analysierten Daten auch in einem Datenspeicher eines Rechensystems abgespeichert werden. Auf diese Weise kann eine spätere Analyse der Funktion der Anlage, insbesondere eine Fehlersuche verbessert werden.

In einer weiteren Ausführung können über die Schnittstelle weitere Rechensysteme für Teilanlagen der Anlage mit dem Rechensystem verbunden werden, wobei die weiteren Rechensysteme eine Anlagensteuerung und/oder eine Zustandsüberwachung und/oder ein Wartungssystem für wenigstens eine Teilanlage der Anlage ausführen und/oder einen Ersatzteilkatalog für wenigstens eine Teilanlage der Anlage aufweisen, wobei jede Teilanlage einen Datenspeicher mit einer Dokumentation über die Teilanlage aufweist. Das Rechensystem kann ausgebildet sein, um über die Schnittstelle auf die Dokumentationen der Teilanlagen der Anlage zuzugreifen, Informationen in den Dokumentationen zu suchen und über die Schnittstelle an ein weiteres Rechensystem und/oder an eine Sensoreinrichtung und/oder an eine Mensch-Maschine-Schnittstelle und/oder ein Anwendungsprogramm auszugeben. Auf diese Weise kann das Rechensystem Informationen in den Dokumentationen der Teilanlagen suchen und über die erste Schnittstelle an ein weiteres Rechensystem und/oder eine Sensorvorrichtung und/oder ein Anwendungsprogramm und/oder über die zweite Schnittstelle an eine Mensch-Maschine-Schnittstelle zu übergeben. Auf diese Weise ist es nicht erforderlich, dass die Informationen über die Teilanlagen zentral gesammelt werden. Bei Bedarf kann auf die einzelnen Informationen der Teilanlagen, insbesondere auf die Dokumentationen der Teilanlagen, die an die Anlage angeschlossen sind, zugegriffen werden.

Zudem kann das Rechensystem ausgebildet sein, um mithilfe eines Wartungs-/Betriebsprogramms wenigstens eine Information über die Anlage zu ermitteln, Anweisungen über die Schnittstelle auszugeben, durchgeführte Schritte zu dokumentieren und/oder in eine Steuerung der Anlage einzugreifen.

Dabei kann das Wartungs-/Betriebsprogramm auf hinterlegtes Wissen und/oder erlerntes Wissen zurückgreifen. Insbesondere kann das Wartungs-/Betriebsprogramm eine künstliche Intelligenz nutzen und insbesondere ein mithilfe der künstlichen Intelligenz erlerntes Wissen bei der Dokumentation oder der Steuerung der Anlage berücksichtigen. Beispielsweise kann das Wartungs-/Betriebsprogramm Auswertungen mit Datenanalysemethoden, wie z.B. Deep Learning, Machine Learning, Support Vector Maschinen durchführen.

In einer weiteren Ausführungsform ist das Rechensystem ausgebildet, um über eine Schnittstelle mithilfe von standardisierten Nachrichten und/oder standardisierten Kommunikationsprotokollen mit wenigstens einem weiteren Rechensystem und/oder Sensorvorrichtungen und/oder mit Mensch-Maschine-Schnittstellen zu kommunizieren, das heißt Daten und Informationen auszutauschen.

In einer Ausführungsform weist das Datenmodell ein erstes Datenmodell auf, das für mehrere weitere Rechensysteme und/oder Sensorvorrichtungen und/oder Mensch-Maschine-Schnittstellen und/oder weitere Anwendungsprogramme vorgesehen ist. Die Recheneinheit ist ausgebildet, um in einem ersten Schritt anhand der Anfrage und mithilfe des ersten Datenmodells das wenigstens eine weitere Rechensystem und/oder die wenigstens eine Sensorvorrichtung und/oder die wenigstens eine Mensch-Maschine-Schnittstelle und/oder das wenigstens eine Anwendungsprogramm zu ermitteln, das die mit der Anfrage gesuchte Information liefern können.

Das Datenmodell weist für jeweils ein weiteres Rechensystem und/oder jeweils eine Sensorvorrichtung und/oder jeweils eine Mensch-Maschine-Schnittstelle und/oder jeweils ein weiteres Anwendungsprogramm ein zweites Datenmodell auf. Für jedes weitere Rechensystem und/oder jede Sensorvorrichtung und/oder jede Mensch-Maschine-Schnittstelle und/oder jedes weitere Anwendungsprogramm kann ein eigenes zweites Datenmodell vorgesehen sein.

Das zweite Datenmodell weist für ein weiteres Rechensystem oder eine Sensorvorrichtung oder eine Mensch-Maschine-Schnittstelle oder ein weiteres Anwendungsprogramm festgelegte Beispiele, insbesondere Beispielsätze, für Anfragen auf, mit denen mithilfe von Funktionen von Anwendungsprogrammen erfolgreich nach Informationen in dem weiteren Rechensystem oder in der Sensorvorrichtung oder in der Mensch-Maschine-Schnittstelle gesucht werden kann. Die Beispiele der zweiten Datenmodelle können anstatt eines Beispielsatzes auch nur ein einzelnes Wort und/oder eine Grafik und/oder ein Tonsignal und/oder ein Sprachsignal und/oder ein Bild umfassen.

Die Recheneinheit ermittelt anhand der zweiten Datenmodelle der im ersten Schritt ermittelten weiteren Rechensysteme und/oder Sensorvorrichtungen und/oder Mensch-Maschine-Schnittstellen und/oder Anwendungsprogrammen, mit welchem Anwendungsprogramm des im ersten Schritt ermittelten weiteren Rechensystems und/oder Sensorvorrichtung und/oder Mensch-Maschine-Schnittstelle und/oder mit welcher Funktion des ermittelten weiteren Anwendungsprogramms die gesuchte Information ermittelt werden kann.

Nach der Ermittlung des Anwendungsprogramms oder der Funktion des Anwendungsprogramms, die die gesuchte Information ermitteln kann, wird die Anfrage an die ermittelte Funktion oder das ermittelte Anwendungsprogramm übergeben. Anschließend empfängt das Rechensystem die Information von der ermittelten Funktion oder von dem ermittelten Anwendungsprogramm.

In einer weiteren Ausführung ist das Datenmodell als trainiertes neuronales Netz ausgebildet, wobei das neuronale Netz ausgebildet ist, um das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können. Das neuronale Netz ist mithilfe eines überwachten Lernverfahrens mit vorgegebenen Beispielen trainiert worden, um anhand einer Anfrage das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können. Die Beispiele sind ähnlich oder identisch zu den Anfragen ausgebildet.

In einer weiteren Ausführung ist das erste Datenmodell mithilfe künstlicher Intelligenz, insbesondere als trainiertes neuronales Netz ausgebildet, wobei die künstliche Intelligenz ausgebildet ist, um das weitere Rechensystem und/oder die Sensorvorrichtung und/oder die Mensch-Maschine-Schnittstelle und/oder das Anwendungsprogramm zu ermitteln, die die gesuchte Information liefern können. Das neuronale Netz kann mithilfe eines überwachten Lernverfahrens mit Beispielen trainiert worden sein. Die Beispiele können ähnlich oder identisch zu den zu Anfragen ausgebildet sein.

In einer weiteren Ausführung ist das zweite Datenmodell mithilfe künstlicher Intelligenz, insbesondere als trainiertes neuronales Netz ausgebildet, wobei die künstliche Intelligenz ausgebildet ist, um das Anwendungsprogramm des weiteren Rechensystems und/oder der Sensorvorrichtung und/oder der Mensch-Maschine-Schnittstelle und/oder die Funktion des Anwendungsprogramms zu ermitteln, die die gesuchte Information liefern können. Das neuronale Netz kann mithilfe eines überwachten Lernverfahrens mit Beispielen trainiert worden sein. Die Beispiele können ähnlich oder identisch zu den Anfragen ausgebildet sein.

In einer Ausführung kann das Rechensystem auf einen Datenspeicher zugreifen oder weist einen Datenspeicher auf. Im Datenspeicher ist als Datenmodell eine Information darüber abgelegt ist, welche weiteren Rechensysteme und/oder welche Sensorvorrichtungen und/oder welche Mensch-Maschine-Schnittstelle über die Schnittstelle angeschlossen sind, und über welche Informationen die weiteren Rechensysteme und/oder Sensorvorrichtungen und/oder Mensch-Maschine-Schnittstelle und/oder weitere Anwendungsprogramm verfügen oder zugreifen können. Auf diese Weise kann das Rechensystem bei einer Anfrage gezielt nach der in der Anfrage gewünschten Information bei wenigstens einem weiteren Rechensystem und/oder einer Sensorvorrichtung und/oder einer Mensch-Maschine-Schnittstelle und/oder einem Anwendungsprogramm suchen. Die Rechensysteme und/oder Sensorvorrichtungen und/oder Mensch-Maschine-Schnittstellen und/oder weiteren Anwendungsprogramme, bei denen gesucht wird, können sich ändern, insbesondere während der Laufzeit eines Programmes, das die Suche ausführt. Auf diese Weise wird die Suche nach der in der Anfrage gewünschten Information vereinfacht und ist schneller ausführbar.

Abhängig von der gewählten Ausführungsform kann die Funktionsweise des Rechensystems und/oder der weiteren Rechensysteme in Form einer elektronischen Schaltung und/oder in Form von Rechenprogrammen realisiert werden.

In einer Ausführung weist das Rechensystem ein Assistentenprogramm auf. Zudem weisen wenigstens ein weiteres Rechensystem und/oder eine Sensorvorrichtung und/oder eine Mensch-Maschine-Schnittstelle wenigstens zwei Anwendungsprogramme auf. Das Assistentenprogramm ist ausgebildet, um eine Anfrage nach einer Information über die Schnittstelle zu empfangen. Zudem ist das Assistentenprogramm ausgebildet, um abhängig von der Information, die von der Anfrage gesucht wird, das Anwendungsprogramm zu ermitteln, das die gesuchte Information bereitstellen kann. Weiterhin ist das Assistentenprogramm ausgebildet, um die Anfrage an das Anwendungsprogramm weiter zu geben, das die Information bereitstellen kann. Zudem ist das Assistentenprogramm ausgebildet, um von den Anwendungsprogrammen die gesuchte Information zu empfangen. Das Assistentenprogramm kann die von den Anwendungsprogrammen empfangene Information über die Schnittstelle an das anfragende weitere Rechensystem und/oder die anfragende Sensorvorrichtung und/oder die anfragende Mensch-Maschine-Schnittstelle ausgeben.

Die Anwendungsprogramme sind ausgebildet, um anhand der übergebenen Anfrage die gewünschte Information zu suchen. Findet das Anwendungsprogramm die gewünschte Information, so wird die gefundene Information an das Assistentenprogramm zurückgegeben. Das Assistentenprogramm ist ausgebildet, um die von den Anwendungsprogrammen erhaltene Information über die erste und/oder die zweite Schnittstelle auszugeben. Die erhaltene Information wird an das weitere Rechensystem, an die Mensch-Maschine-Schnittstelle und/oder an die Sensorvorrichtung ausgegeben, je nachdem, ob das weitere Rechensystem, die Sensorvorrichtung und/oder die Mensch-Maschine-Schnittstelle die Anfrage an das Assistentenprogramm übermittelt haben. Das Assistentenprogramm kann ausgebildet sein, um eine Freifeldsuche, eine Spracheingabe und/oder ein Maschine-zu-Maschine-Interface zu realisieren. Weiterhin kann das Assistentenprogramm webbasiert programmiert sein.

In einer Ausführungsform sind die zwei Anwendungsprogramme ausgebildet, um verschiedene Informationen und/oder Informationen mit unterschiedlicher Darstellung und/oder Informationen von verschiedenen Teilanlagen der Anlage und/oder Informationen von verschiedenen Datenbanken der Anlage zu suchen. Beispielsweise können mithilfe der Anwendungsprogramme bestimmte Betriebsdaten, bestimmte Steuerdaten, bestimmte Qualitätsdaten, vorgegebene Fehlerberichte, Daten von verschiedenen Anlagenteilen der Anlage und Daten von verschiedenen Datenbanken der Anlage gesucht werden. Zudem können die Informationen sich in der Art der Daten wie z.B. Datenwerte, Bilder, analysierte Daten, erlernte Daten, aggregierte Daten usw. unterscheiden. Weiterhin können die Informationen in Form von Dokumenten, Zeichnungen, Bildern, Abkürzungen usw. vorliegen.

In einer weiteren Ausführungsform ist das Rechensystem ausgebildet, insbesondere mithilfe des Assistentenprogramms, um Bilder, Dokumente, Webadressen von Informationen und/oder Daten über die erste und/oder die zweite Schnittstelle auszugeben. Somit können beispielsweise Informationen in Form von Bildern, in Form von Dokumenten oder in Form von Webadressen der Informationen über die erste und/oder die zweite Schnittstelle ausgegeben werden.

Es wird ein computerimplementiertes Verfahren zur Steuerung und/oder zur Überwachung einer technischen Anlage zur Metallerzeugung und/oder Metallverarbeitung bereitgestellt, das in den Verfahrensansprüchen beschrieben ist.

In einer Ausführung verwendet das Rechensystem ein Assistentenprogramm mit wenigstens einer Schnittstelle zum Verbinden mit Anwendungsprogrammen. Das Assistentenprogramm erhält über die Schnittstelle eine Anfrage über eine Information über die Anlage von wenigstens einem anfragenden Anwendungsprogramm. Das Assistentenprogramm kann auf ein Datenmodell zugreifen, wobei das Datenmodell einen Hinweis darauf gibt, welche Informationen wenigstens ein weiteres Anwendungsprogramm bereitstellen kann. Das Assistentenprogramm ermittelt anhand der Anfrage und anhand des Datenmodells, welches Anwendungsprogramm die angefragte Information bereitstellen kann. Dann übermittelt das Assistentenprogramm die Anfrage an das wenigstens eine ermittelte Anwendungsprogramm, das die Information bereitstellen kann. Das Assistentenprogramm empfängt eine Antwort von dem ermittelten Anwendungsprogramm und gibt die empfangene Antwort an das anfragende Anwendungsprogramm aus. Die eingeholte Information kann insbesondere von dem Assistentenprogramm und/oder einem der Anwendungsprogramm verwendet werden, um in die Steuerung einer Funktion der Anlage einzugreifen und die Steuerung zu ändern. Beispielsweise kann die Anlagenautomatisierung die eingeholte Information verwenden, um die Steuerung der Anlage zu ändern.

In einer Ausführung weist das Datenmodell ein erstes Datenmodell auf, das für mehrere weitere Anwendungsprogramme vorgesehen ist. Zudem weist das Datenmodell zweite Datenmodelle für wenigstens ein weiteres Anwendungsprogramm, insbesondere für jedes der weiteren Anwendungsprogramme auf. Das Assistentenprogramm ermittelt zuerst anhand der Anfrage und mithilfe des ersten Datenmodells das oder die weiteren Anwendungsprogramme, die die gewünschte Information liefern können. Anschließend ermittelt das Assistentenprogramm anhand des wenigstens einen zweiten Datenmodells des im ersten Schritt ermittelten wenigstens einen weiteren Anwendungsprogrammes eine Funktion des ermittelten weiteren Anwendungsprogrammes, das die gesuchte Information liefern kann. Anschließend übergibt das Assistentenprogramm die Anfrage an die ermittelte Funktion des ermittelten weiteren Anwendungsprogrammes. Dann empfängt das Assistentenprogramm als Antwort von der ermittelten Funktion die mit der Anfrage gesuchte Information.

Das Datenmodell ist als trainiertes neuronales Netz ausgebildet. Das trainierte neuronale Netz ist ausgebildet, um das oder die weiteren Anwendungsprogramme und/oder die Funktion der weiteren Anwendungsprogramme zu ermitteln, die die gesuchte Information liefern können. Das neuronale Netz ist mithilfe eines überwachten Lernverfahrens mit Beispielen trainiert worden. Die Beispiele sind ähnlich oder identisch zu den Anfragen ausgebildet.

In einer Ausführungsform sind das erste und das zweite Datenmodell als trainierte neuronale Netze ausgebildet. Die neuronalen Netze sind ausgebildet, um das oder die weiteren Anwendungsprogramme und/oder die Funktion der weiteren Anwendungsprogramme zu ermitteln, die die gesuchte Information liefern können. Das neuronale Netz kann mithilfe eines überwachten Lernverfahrens mit Beispielen trainiert worden sein. Die Beispiele können ähnlich oder identisch zu den zu Anfragen ausgebildet sein.

In einer Ausführungsform ermittelt das Assistentenprogramm aus der Anfrage eine mit der Anfrage gesuchte Information. Dann stellt das Assistentenprogramm mithilfe der gesuchten Information und dem Datenmodell fest, welches Anwendungsprogramm die gesuchte Information liefern kann. Dabei kann das Assistentenprogramm insbesondere prüfen, mit welcher Wahrscheinlichkeit welches Anwendungsprogramm die gesuchte Information liefern kann. In der Regel gibt das Assistentenprogramm die Anfrage an die Anwendungsprogramme weiter, die die höchsten Wahrscheinlichkeiten aufweisen. Dadurch wird der Aufwand für eine erfolgreiche Suche reduziert.

In einer Ausführungsform ermittelt das Assistentenprogramm über ein Erkennungsprogramm, insbesondere ein NLU Programm, aus einer in Text vorliegenden Anfrage die durch die Anfrage gesuchte Information. Das Erkennungsprogramm kann mithilfe einer künstlichen Intelligenz ausgebildet sein, insbesondere als trainiertes neuronales Netz ausgebildet sein. Das Assistentenprogramm kann auf ein Datenmodell für die Anwendungsprogramme zugreifen. Das Datenmodell enthält einen Hinweis darauf, auf welche Informationen die Anwendungsprogramme, mit denen das Assistentenprogramm eine Kommunikation aufbauen kann, zugreifen können. Das Assistentenprogramm ermittelt insbesondere durch einen Vergleich der Anfrage, insbesondere der gesuchten Information, mit den Beispielen des Datenmodells, welche der Anwendungsprogramme, die gesuchte Information liefern können. Dazu kann auch ein trainiertes neuronales Netz als Datenmodell eingesetzt werden, das anhand der Anfrage die Anwendungsprogramme ermittelt, die für die Ausführung der Anfrage am besten geeignet sind. Dabei kann das Assistentenprogramm beispielsweise eine Wahrscheinlichkeit ermitteln, mit der ein Anwendungsprogramm die Anfrage ausführen kann und beispielsweise eine gewünschte Information ermitteln kann.

In einer Ausführungsform weist das Datenmodell für wenigstens einen Teil der Anwendungsprogramme jeweils ein festgelegtes Beispiel für eine Suche nach Information mit dem Anwendungsprogramm auf. Das festgelegte Beispiel kann z.B. in Form eines Beispielwortes oder wenigstens eines Beispielsatzes, insbesondere in Form mehrerer Beispielsätze ausgebildet sein. Die festgelegten Beispiele stellen Suchanfragen dar, mit denen mithilfe der Anwendungsprogramme nach Informationen gesucht werden kann. Beispielsweise kann ein NLU Programm durch einen Vergleich der festgelegten Beispielsätze mit der gesuchten Information prüfen, welches Anwendungsprogramm die gesuchte Information liefern kann. Dabei kann das NLU Programm auch Wahrscheinlichkeiten für die einzelnen Anwendungsprogramme dafür ermitteln, dass ein Anwendungsprogramm die Anfrage ausführen kann und beispielsweise eine gesuchte Information liefern kann.

In einer Ausführungsform empfängt das Assistentenprogramm als Antwort auf eine Anfrage nach einer Information von dem angefragten Anwendungsprogramm eine weitere Anfrage nach einer weiteren Information über die Anlage. Das Assistentenprogramm ermittelt anhand der weiteren Anfrage, welches Anwendungsprogramm die weitere Anfrage beantworten kann. Anschließend holt das Assistentenprogramm die weitere Information von dem wenigstens einen ermittelten Anwendungsprogramm ein, wobei das Assistentenprogramm die eingeholte weitere Information an das angefragte Anwendungsprogramm ausgibt. Somit besteht die Möglichkeit, dass ein Anwendungsprogramm, das nach einer Information gefragt wurde, selbst eine Anfrage nach einer weiteren Information stellen kann. Somit kann eine Information beispielsweise von mehreren Anwendungsprogrammen zusammen ermittelt und an das Assistentenprogramm übermittelt werden. Somit kann eine Anfrage von einem Anwendungsprogramm beantwortet werden, selbst wenn das Anwendungsprogramm nur einen Teil der Anfrage beantworten kann und sich zur Beantwortung der Anfrage weitere Informationen von anderen Antwortprogrammen einholt.

In einer Ausführungsform holt das Assistentenprogramm abhängig von wenigstens einem vorgegebenen Betriebszustand der Anlage und/oder abhängig von wenigstens einem vorgegebenen Steuerwert für die Anlage eine festgelegte Information von wenigstens einem Anwendungsprogramm ein. Anschließend gibt das Assistentenprogramm die selbständig eingeholte Information an ein weiteres Anwendungsprogramm aus oder speichert die selbständig eingeholte Information in einem Datenspeicher ab.

In einer Ausführung basiert die Information auf einem Betriebszustand der Anlage oder einer Steuergröße der Anlage. Beispielsweise kann die gesuchte Information auf Kameradaten oder Videodaten basieren und insbesondere ein Bild oder eine Videosequenz darstellen.

In einer Ausführung gibt das Assistentenprogramm die eingeholte Information an das anfragende Anwendungsprogramm weiter. Zudem kann das Assistentenprogramm anstelle der Information selbst eine Webadresse oder eine Speicheradresse an das anfragende Anwendungsprogramm weitergeben. In diesem Fall kann das Anwendungsprogramm über den Zugriff auf die Webadresse oder die Speicheradresse die gesuchte Information selbst holen, bereitstellen, ausgeben und/oder abspeichern.

In einer Ausführung setzt das Assistentenprogramm eine Anfrage in Form einer akustischen Anfrage, insbesondere als Sprachanfrage in eine Programmanfrage um und sucht die in der akustischen Anfrage gewünschte Information über ein Anwendungsprogramm, wobei das Assistentenprogramm die gefundene Information an ein Anwendungsprogramm ausgibt

In einer Ausführung erfasst das Assistentenprogramm wenigstens zu festgelegten Zeitpunkten, insbesondere kontinuierlich, einen Betriebszustand der Anlage und/oder eine Produktionsqualität der Anlage und/oder einen Wartungszustand der Anlage und speichert diese in einem Datenspeicher ab und/oder gibt diese an Anwendungsprogramme weiter.

In einer Ausführung analysiert das Assistentenprogramm die erfassten Betriebszustände und/oder Produktionsqualitäten und/oder Wartungszustände mit Hilfe von technologischen Wissen und ermittelt zusätzliche Informationen und/oder Handlungsempfehlungen und/oder Steuerwerte für die Anlage und speichert diese ab und/oder gibt diese an Anwendungsprogramme insbesondere zur Überwachung und/oder zur Steuerung der Anlage aus.

In einer Ausführung sind mit dem Assistentenprogramm mehrere Anwendungsprogramme von Teilanlagen der Anlage verbunden. Die Anwendungsprogramme der Teilanlagen können beispielsweise eine Anlagensteuerung und/oder eine Zustandsüberwachung der Anlage und/oder ein Wartungssystem der Anlage und/oder einen Ersatzteilkatalog wenigstens einer Teilanlage der Anlage aufweisen. Zudem kann ein Anwendungsprogramm einer Teilanlage auf eine Dokumentation über die Teilanlage verfügen bzw. darauf zugreifen. Das Assistentenprogramm kann z.B. auf die Dokumentationen der Teilanlage zugreifen, Informationen in der Dokumentation suchen und die Informationen der Dokumentationen an ein Anwendungsprogramm weitergeben.

In einer Ausführung ermittelt das Assistentenprogramm mithilfe eines Wartungs-/Betriebsprogramms Informationen über die Anlage und gibt die Informationen oder anhand der Informationen ermittelte Anweisungen und/oder Steuerwerte für die Anlage an ein Anwendungsprogramm weiter. Weiterhin kann das Assistentenprogramm die durchgeführten Schritte dokumentieren. Zudem kann das Assistentenprogramm aufgrund der Informationen und/oder Anweisungen und/oder Steuerwerte in eine Steuerung einer Funktion der Anlage eingreifen und die Steuerung der Funktion der Anlage verändern. Zudem kann das Anwendungsprogramm aufgrund der Informationen und/oder Anweisungen selbst Steuerwerte für die Anlage ermitteln. Weiterhin kann das Anwendungsprogramm mit den Steuerwerten in eine Steuerung einer Funktion der Anlage eingreifen und die Steuerung der Funktion der Anlage verändern.

Dabei können das Assistentenprogramm und/oder das Anwendungsprogramm gespeichertes Wissen und/oder erlerntes gespeichertes Wissen, insbesondere mit künstlicher Intelligenz erlerntes gespeichertes Wissen berücksichtigen und insbesondere Auswertungen mit Datenanalyse-Methoden durchführen. Das Anwendungsprogramm kann beispielsweise ein Wartungs-/Betriebsprogramm sein.

In einer Ausführung kommuniziert das Assistentenprogramm mithilfe von standardisierten Nachrichten und/oder standardisierten Kommunikationsprotokollen mit den Anwendungsprogrammen.

In einer Ausführung greift das Assistentenprogramm auf einen Datenspeicher zu, wobei im Datenspeicher eine Information darüber abgelegt ist, welche Anwendungsprogramme über die erste Schnittstelle angeschlossen sind, und wobei insbesondere im Datenspeicher eine Information darüber abgelegt ist, über welche Daten und/oder Informationen die Anwendungsprogramme verfügen.

In einer Ausführung kommuniziert das Assistentenprogramm wenigstens mit zwei Anwendungsprogrammen, wobei das Assistentenprogramm eine Anfrage nach einer Information von einem anfragenden Anwendungsprogramm empfängt. Das Assistentenprogramm gibt abhängig von der gesuchten Information die Anfrage an eines der zwei Anwendungsprogramme weiter. Das Anwendungsprogramm, an das die Anfrage weitergegeben wurde, sucht anhand der übergebenen Anfrage die gewünschte Information und gibt die gefundene Information an das Assistentenprogramm als Antwort zurück. Das Assistentenprogramm gibt die von dem Anwendungsprogramm erhaltene Information an das anfragende Anwendungsprogramm aus.

In einer Ausführung sind die zwei Anwendungsprogramme ausgebildet, um verschiedene Informationen und/oder Informationen mit unterschiedlicher Darstellung und/oder Informationen von verschiedenen Teilanlagen der Anlage und/oder Informationen von verschiedenen Datenbanken der Anlage zu suchen.

In einer Ausführung gibt das Assistentenprogramm die gefundenen Informationen, die beispielsweise Bilder, Dokumente oder Daten sein können, an das anfragende Anwendungsprogramm weiter. Zudem kann das Assistentenprogramm anstelle der Informationen selbst eine Webadresse oder einen Speicherort, an denen die Informationen zu finden sind, an das anfragende Anwendungsprogramm weiter.

Eine Anfrage kann die Durchführung einer vorgegebenen Steuerung der Anlage, eine Änderung der Steuerung der Anlage und/oder eine Bereitstellung einer Information beispielsweise für eine Bedienperson oder für ein Anwendungsprogramm, das eine Überwachung und/oder eine Steuerung der Anlage durchführt, beinhalten.

Die Anwendungsprogramme können von einem oder mehreren der weiteren Rechensysteme und/oder Sensorvorrichtungen und/oder Mensch-Maschine-Schnittstellen ausgeführt werden.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen strukturellen Aufbau einer Anlage zur Metallerzeugung und/oder Metallverarbeitung;
- FIG 2: einen strukturellen Aufbau einer Vorrichtung mit einem Rechensystem, weiteren Rechensystemen, Sensorvorrichtungen und einer Mensch-Maschine-Schnittstelle zur Steuerung und/oder zur Überwachung einer technischen Anlage;
- FIG 3: eine Darstellung eines computerimplementierten Verfahrens zur Verarbeitung einer Anfrage durch das Rechensystem;
- FIG 4: einen Verfahrensablauf zur Abarbeitung einer weiteren Anfrage mithilfe des Rechensystems;
- FIG 5: einen strukturellen Aufbau einer weiteren Vorrichtung mit einem Rechensystem und weiteren Rechensystemen zur Steuerung und/oder zur Überwachung einer technischen Anlage;
- FIG 6: einen strukturellen Aufbau einer weiteren Vorrichtung mit einem Rechensystem und weiteren Rechensystemen zur Steuerung und/oder zur Überwachung einer technischen Anlage;
- FIG 7: einen strukturellen Aufbau einer weiteren Vorrichtung mit einem Rechensystem und weiteren Rechensystemen zur Steuerung und/oder zur Überwachung einer technischen Anlage, und
- FIG 8: einen strukturellen Aufbau einer weiteren Vorrichtung mit einem Rechensystem und weiteren Rechensystemen zur Steuerung und/oder zur Überwachung einer technischen Anlage.

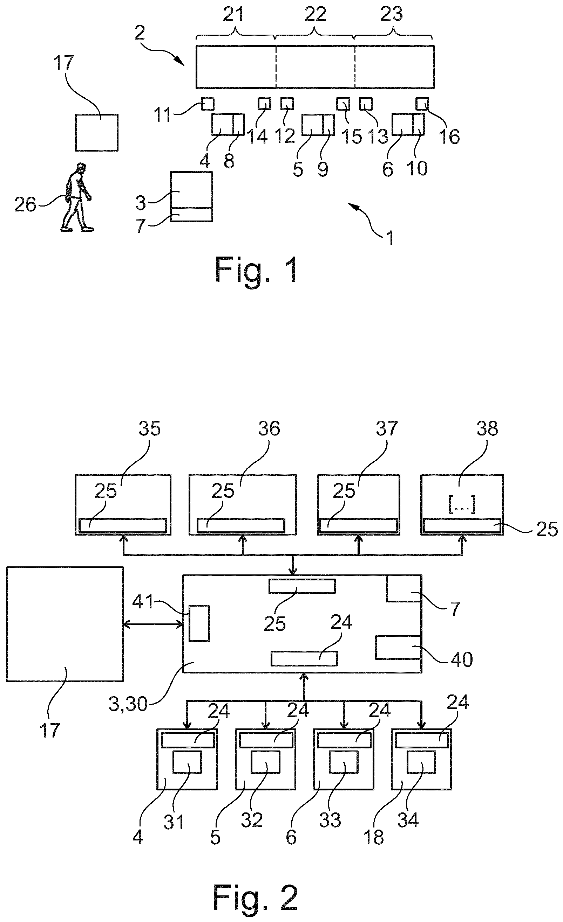

FIG 1 zeigt in einer schematischen Darstellung eine Anlage 2 mit einer Vorrichtung 1 zur Steuerung und/oder zur Überwachung der technischen Anlage 2. Die Anlage 2 ist ausgebildet, um Metall zu erzeugen und/oder Metall weiterzuverarbeiten. Beispielsweise kann die Anlage 2 zur Stahlerzeugung und/oder Stahlverarbeitung ausgebildet sein. Die Anlage 2 kann einen Hochofen, einen Konverter, einen Elektro-Lichtbogenofen, Aggregate zur Sekundärmetallurgie, eine Stranggießanlage, ein Walzwerk und/oder eine Bandbehandlungslinie aufweisen. Beispielsweise kann die Anlage als Anlage zur Eisenerzeugung, insbesondere Stahlerzeugung ausgebildet sein und beispielsweise einen Hochofen, eine direkte Reduktionsanlage des Typs Finex, des Typs Corex oder des Typs Midrex, vom Typ Drehrohr oder Drehherd mit oder ohne Submerged Arc Furnace aufweisen.

Weiterhin kann die Anlage 2 nachgeordnete Einrichtungen aufweisen, in denen aus Roheisen Stahl erzeugt wird. Beispiele derartiger Anlagen sind ein Lichtbogenofen, ein Konverter und Anlagen, in denen Pfannenprozesse erfolgen wie beispielsweise eine Vakuumbehandlungsanlage. Zudem kann die Anlage eine der Stahlerzeugung nachgeordnete Einrichtung aufweisen, in denen ein Urformen des Metalls und ein Umformen des urgeformten Metalls erfolgen. Beispiele derartiger Anlagen sind eine Stranggießanlage und Walzwerke. Bei den Walzwerken kann es sich beispielsweise um ein Walzwerk zum Walzen eines flachen Walzguts wie beispielsweise eine Vorstraße, eine Fertigstraße, ein Steckelwalzwerk und andere handeln. Weiterhin kann es sich bei den Walzwerken um ein Walzwerk zum Walzen beliebiger Querschnitte handeln, beispielsweise eines Knüppelquerschnitts. Bei dem Walzwerk kann es sich alternativ um ein Walzwerk zum Warmwalzen von Metall, ein Walzwerk zum Kaltwalzen von Metall oder ein kombiniertes Walzwerk handeln, in dem das Metall zunächst warmgewalzt und dann kaltgewalzt wird. Zudem kann die Anlage auch eine Kühlstrecke gegebenenfalls in Kombination mit einem Walzwerk aufweisen. Zudem kann die Anlage auch andere, einem Walzwerk vor- oder nachgeordnete Anlagen aufweisen, wie beispielsweise eine Glühe oder eine Beize.

Die Anlage 2 kann in mehrere Teilanlagen 21, 22, 23 unterteilt sein. Die Teilanlagen 21, 22, 23 übernehmen Teilaufgaben der Metallerzeugung und/oder Metallverarbeitung.

Zudem ist eine Vorrichtung 1 zur Steuerung und/oder zur Überwachung der Anlage 2 vorgesehen. Die Vorrichtung 1 kann ein übergeordnetes System wie eine Produktionsplanung und/oder ein Logistiksystem oder ein Steuersystem aufweisen, die beispielsweise mithilfe wenigstens einem oder mehreren der dargestellten Rechensysteme realisiert werden.

Die Vorrichtung 1 kann ein erstes Rechensystem 3 mit einem ersten Datenspeicher 7, ein zweites Rechensystem 4 mit einem zweiten Datenspeicher 8, ein drittes Rechensystem 5 mit einem dritten Datenspeicher 9 und ein viertes Rechensystem 6 mit einem vierten Datenspeicher 10 aufweisen. Abhängig von der gewählten Ausführungsform können auch mehr oder weniger Rechensysteme vorgesehen sein.

Das erste Rechensystem 3 kann als zentrales Rechensystem vorgesehen sein, das mit den weiteren Rechensystemen 4, 5, 6 in Verbindung steht. Zudem kann jedes Rechensystem 3, 4, 5, 6 mit einer ersten, zweiten bzw. dritten Sensorvorrichtung 11, 12, 13 in Verbindung stehen. Die Sensorvorrichtungen können in Form von Smarten Sensoren ausgebildet sein. Ein Smarter Sensor ist ein Sensor, der neben der eigentlichen Messgrößenerfassung auch eine Signalaufbereitung und Signalverarbeitung in einem Gehäuse vereinigt. Solche komplexen Sensoren beinhalten meist u. a. einen Mikroprozessor oder Mikrocontroller, wenn nötig auch zusätzlich mit DSP-Funktionalität und dergleichen mehr wie z.B. komplexe Logikeinheiten wie z.B. FPGAs usw. und stellen standardisierte Schnittstellen zur Kommunikation mit übergeordneten Systemen bereit, wie z.B. Feldbussysteme, Sensornetze, IO-Link usw.

Die Sensorvorrichtungen 11, 12, 13 erfassen Betriebszustände und/oder Betriebsparameter der Anlage 2 und melden diese an das entsprechende Rechensystem 4, 5, 6 weiter. Abhängig von der gewählten Ausführungsform können die Sensorvorrichtungen 11, 12, 13 auch direkt mit dem ersten Rechensystem 3 in Verbindung stehen. Zudem können die Sensorvorrichtungen 11, 12, 13 über eigene Rechensysteme mit Recheneinheiten und Schnittstellen verfügen und als smarte Sensoren ausgebildet sein und mit dem ersten Rechensystem 3 in Verbindung stehen. Zudem kann die Anlage 2 über Aktoren 14, 15, 16 verfügen, die von wenigstens einem Rechensystem 4, 5, 6 mit einem Steuerwert angesteuert werden. Die Aktoren 14, 15, 16 dienen dazu, um Betriebszustände der Anlage 2 zu verändern.

Weiterhin ist wenigstens eine Mensch-Maschine-Schnittstelle 17 vorgesehen, die mit dem ersten Rechensystem 3 verbunden ist und die zur Eingabe von Anfragen, zum Empfangen von Anfragen und zur Ausgabe von Informationen ausgebildet ist. Die Mensch-Maschine-Schnittstelle 17 kann wenigstens einen oder mehrere Bildschirme aufweisen. Zudem kann die Mensch-Maschine-Schnittstelle 17 Eingabemittel in Form einer Tastatur, einer Gestensteuerung oder eines Mikrofons und eine Sprachsteuerung aufweisen. Über die Mensch-Maschine-Schnittstelle 17 kann eine Bedienperson 26 Informationen über die Anlage 2 erfragen, wobei die Informationen über die Anlage 2 über die Mensch-Maschine-Schnittstelle 17 ausgegeben werden. Zudem kann die Mensch-Maschine-Schnittstelle 17 Anfragen von den Rechensystemen erhalten und die Anfragen beantworten. Dazu kann die Mensch-Maschine-Schnittstelle 17 eine Recheneinheit und einen Datenspeicher aufweisen. Auf der Recheneinheit können Anwendungsprogramme zum Betreiben der Mensch-Maschine-Schnittstelle ablaufen.

Jedes der Rechensysteme 3, 4, 5, 6 verfügt über wenigstens eine Recheneinheit, eine erste Schnittstelle und wenigstens ein Programm, insbesondere ein Assistentenprogramm und/oder ein Anwendungsprogramm, mit denen Daten und/oder Sensorinformationen und/oder Steuerwerte verarbeitet, empfangen und/oder ausgegeben werden können. Ein Rechensystem 4, 5, 6 kann über eine Prozessautomatisierung für die Anlage 2 in Form von elektrischen Schaltungen und/oder in Form eines Anwendungsprogrammes verfügen. Die Prozessautomatisierung kann mehrere Level umfassen. Ein Level 0 wird z.B. von der Sensorik und der Aktorik gebildet. Ein Level 1 bildet eine Basisautomatisierung zum Steuern und/oder Regeln der Anlage, die insbesondere Regelkreise implementiert. Ein Level 2 enthält eine technologische Automatisierung, die Prozessmodelle umfasst und die Sollwerte für die Regelkreise ermittelt. Zudem können weitere Level vorgesehen sein, die beispielsweise eine Produktionsplanung, eine Wartung, eine Wartungsplanung und/oder eine Qualitätsbeurteilung umfassen können.

Ein Betrieb der Anlage 2 ist in der Regel zwar hochautomatisiert mithilfe der Rechensysteme 4, 5, 6, aber nicht immer vollständig und geschlossen automatisiert. Insbesondere besteht für eine Bedienperson 26 die Möglichkeit, bei besonderen Situationen, wie beispielsweise Störungen, in die automatische Steuerung der Anlage einzugreifen. Ein Eingriff der Bedienperson 26 erfolgt z.B. über die Mensch-Maschine-Schnittstelle 17 auf wenigstens ein Rechensystem 3, 4, 5, 6 z.B. mit dem Ziel, einen sicheren Betrieb der Anlage aufrechtzuerhalten und/oder negative Folgen auf den Betrieb der Anlage als solche, die Produktivität der Anlage und/oder die Produktqualität möglichst zu vermeiden.

FIG 2 zeigt in einer schematischen Darstellung ein Grundkonzept für die Zusammenarbeit des ersten Rechensystems 3 mit dem zweiten, dritten und vierten und einem fünften Rechensystem 4, 5, 6, 18. In dem zweiten, dritten, vierten und fünften Rechensystem 4, 5, 6, 18 kann jeweils ein erstes, zweites, drittes, viertes und fünftes Anwendungsprogramm 31, 32, 33, 34, 35 ablaufen. Beispielsweise können das zweite Rechensystem 4 und das dritte Rechensystem 5 eine Prozessautomatisierung der Anlage 2 ausführen. Dabei kann das zweite Rechensystem 4 das Level 1 und das dritte Rechensystem 5 das Level 2 der Prozessautomatisierung ausführen. Das vierte Rechensystem 6 kann beispielsweise eine Zustandsüberwachung der Anlage 2 ausführen. Das fünfte Rechensystem 18 kann eine Prozessoptimierung über den gesamten Prozess durchführen, wobei Expertenwissen in Form von Expertenregeln in einem Datenspeicher des fünften Rechensystems 18 abgespeichert ist und vom fünften Rechensystem 18 berücksichtigt wird. Weiterhin kann ein Rechensystem ein Anwendungsprogramm für ein Qualitätssicherungssystem ausführen. Das Qualitätssicherungssystem kann dazu vorgesehen, um die Qualität in allen Produktionsprozessen entlang der gesamten Produktionskette kontinuierlich zu überwachen und zu steuern.

In einer weiteren Ausführungsform kann eines der genannten Rechensysteme ein Anwendungsprogramm für ein Instandhaltungsverfahren ausführen. Bei dem Instandhaltungsverfahren wird Expertenwissen berücksichtigt, das z.B. in einem Datenspeicher des Rechensystems abgespeichert ist, um unproduktive und zeitaufwändige Instandhaltungsroutinen in ein intelligentes Asset-Management-Programm umzuwandeln, mit dem Instandhaltungsentscheidungen strategisch und auf dynamische Weise getroffen werden können. Das Instandhaltungsprogramm kann ausgebildet sein, um Vergangenheitsdaten für eine bestimmte Anlagenkomponente abzurufen. Die Daten können Informationen darüber beinhalten, wie häufig Reparaturarbeiten erforderlich waren, wann Komponenten der Anlage zum letzten Mal ausgetauscht wurden, welche Verbesserungen vorgenommen wurden usw. Durch eine Datenanalyse lässt sich die Instandhaltung reibungsloser, kalkulierbarer und besser planen.

Die Datenkommunikation zwischen dem ersten Rechensystem 3 und dem zweiten, dritten, vierten und fünften Rechensystem 4, 5, 6, 18 erfolgt z.B. über eine erste Schnittstelle 24. Die erste Schnittstelle 24 kann beispielsweise in Form eines festgelegten Kommunikationsprotokolls mit festgelegten Nachrichten ausgebildet sein. Beispielsweise kann die erste Schnittstelle 24 in Form eines Message Brokers realisiert sein, der zum Versenden von Nachrichten zwischen den ersten und/oder zweiten Schnittstellen der Rechensysteme und/oder Sensorvorrichtungen verwendet wird. Der Message Broker kann für den Austausch von Nachrichten eines von mehreren möglichen Kommunikationsprotokollen implementieren.

Das erste Rechensystem 3 kann ein Assistentenprogramm 30 aufweisen, das eine Datenkommunikation mit dem zweiten, dritten, vierten, fünften Rechensystem 4, 5, 6, 18, der wenigstens einen Mensch-Maschine-Schnittstelle 17 und/oder den Sensorvorrichtungen realisiert. Die Mensch-Maschine-Schnittstelle 17 ist über eine weitere Schnittstelle 41, beispielsweise eine Programmierschnittstelle mit dem ersten Rechensystem 3 bzw. dem Assistentenprogramm 30 verbunden. Die Sensorvorrichtungen können z.B. über das zweite, dritte und vierte Rechensystem mit dem ersten Rechensystem in Verbindung stehen oder direkt mit dem ersten Rechensystem verbunden sein.

Weiterhin verfügt das erste Rechensystem 3 über eine zweite Schnittstelle 25, über die weitere Anwendungsprogramme 35, 36, 37, 38 mit dem Assistentenprogramm 30 in Verbindung stehen. Die weiteren Anwendungsprogramme können auf dem ersten Rechensystem 3 und/oder auf einem der weiteren Rechensysteme 4, 5, 6, 18 ablaufen und/oder die weiteren Anwendungsprogramme können als Cloud-Lösung realisiert sein und über eine Netzwerkverbindung, beispielsweise eine Internetverbindung, mit dem Rechensystem 3 verbunden sein. Jedes der weiteren Anwendungsprogramme 35, 36, 37, 38 kann eine oder mehrere Funktionen ausführen, mit denen festgelegte Informationen über die Anlage 2 ermittelt werden können. Die zweite Schnittstelle 25 kann wie die erste Schnittstelle 24 in Form eines Message Brokers ausgebildet sein. Abhängig von der gewählten Ausführungsform kann auch eine andere Art der Datenkommunikation insbesondere mit festgelegten Nachrichten und/oder einem festgelegten Kommunikationsprotokoll verwendet werden. Die weiteren Assistentenprogramme 35, 36, 37, 38 können beispielsweise für das Auffinden und/oder das Abspeichern von Informationen über die Anlage 2 vorgesehen sein.

Beispielsweise kann das fünfte Anwendungsprogramm 35 eine Bilderdatenbank über die Anlage 2 verwalten. In der Bilderdatenbank können aktuelle und/oder in der Vergangenheit aufgenommene Bilder und/oder Videosequenzen von bestimmten Abschnitten der Anlage abgespeichert sein. Das sechste Anwendungsprogramm 36 kann eine Datenbank über Abkürzungen von Komponenten, Funktionen, Daten, Betriebszuständen, Steuerdaten usw. der Anlage aufweisen. Das siebte Anwendungsprogramm 37 kann beispielsweise in Form eines Dokumentensuchprogrammes ausgebildet sein, mit dem Dokumente über Komponenten, Teile und/oder Teilanlagen der Anlage 2 gesucht werden können. Das achte Anwendungsprogramm 38 kann als Programm zur Dokumentation von Informationen über Betriebszustände und/oder Steuerdaten und/oder Betriebsparameter der Anlage 2 ausgebildet sein.

Das erste Rechensystem 3 verfügt zudem beispielsweise über ein Spracherkennungsprogramm 40, mit dem gesprochene Sprache analysiert, ausgewertet und Informationen der gesprochenen Sprache ermittelt und/oder weiter verarbeitet werden kann. Beispielsweise kann als Spracherkennungsprogramm ein Rasa-NLU-Programm verwendet werden. Anstelle der ersten und zweiten Schnittstelle kann auch nur eine Schnittstelle vorgesehen sein, um das Rechensystem mit den weiteren Rechensystemen, den Sensorvorrichtungen und/oder den Mensch-Maschine-Schnittstellen zu verbinden und Daten auszutauschen.

Das Assistentenprogramm 30 realisiert ein digitales Assistenzsystem, das auf Anwendungen in Form der weiteren Anwendungsprogramme 35, 36, 37, 38 oder auf Anwendungsprogramme der weiteren Rechensysteme und/oder auf Anwendungsprogramme der Sensorvorrichtungen zugreifen kann. Zudem kann das digitale Assistenzsystem in Form des Assistentenprogramms 30 auf Daten und Informationen der Rechensysteme 4, 5, 6, 18, der Sensorvorrichtungen und/oder der Mensch-Maschine-Schnittstellen zugreifen und Anfragen und Antworten mit den Rechensystemen, den Sensorvorrichtungen und/oder den Mensch-Maschine-Schnittstellen austauschen.

Somit hat eine Bedienperson 26 die Möglichkeit, über die Mensch-Maschine-Schnittstelle 17 auf eine einfache Weise auf alle Daten der Rechensysteme und der Sensorvorrichtungen mithilfe der weiteren Anwendungsprogramme 35, 36, 37, 38 und des Assistentenprogramms 30 zuzugreifen. Weiterhin können das zweite, dritte, vierte und fünfte Rechensystem 4, 5, 6, 18 und die Sensorvorrichtungen mithilfe des Assistentenprogramms auf Daten der anderen Rechensysteme, der anderen Sensorvorrichtungen und der Mensch-Maschine-Schnittstellen zugreifen, wobei auch die weiteren Anwendungsprogramme 35, 36, 37, 38 verwendet werden können.

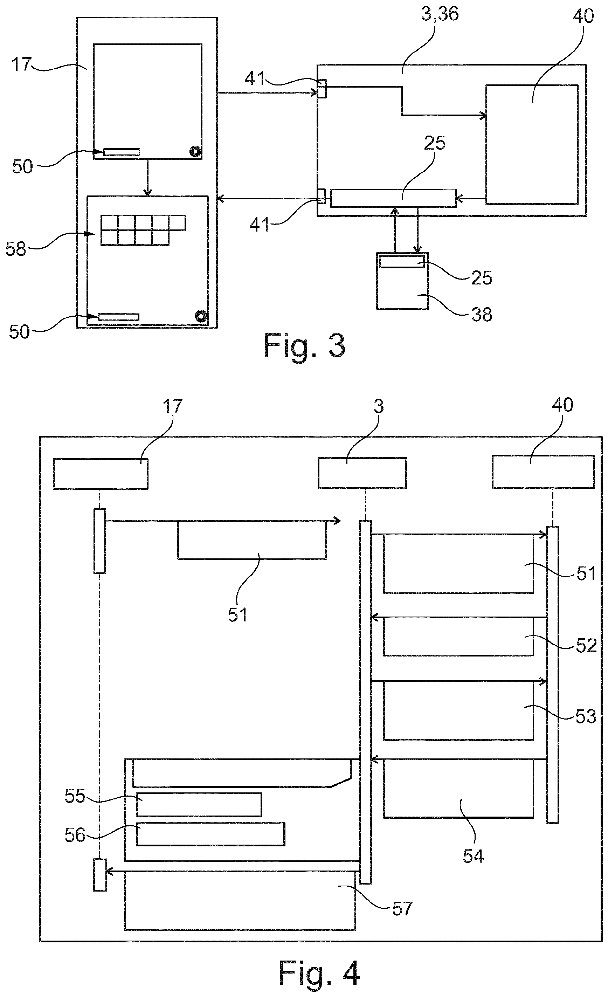

FIG 3 zeigt in einer schematischen Darstellung ein computerimplementiertes Verfahren, mit dem eine Bedienperson über die Mensch-Maschine-Schnittstelle 17 Informationen über die Anlage 2 mithilfe des ersten Rechensystems 3 einholen kann. Dazu gibt die Bedienperson z.B. über eine Tastatur in ein Eingabefeld 50 eines Bildschirms der Mensch-Maschine-Schnittstelle 17 eine Anfrage ein. Die Anfrage lautet: "Zeige mir einige Beispiele". Abhängig von der gewählten Ausführungsform kann die Anfrage auch über ein Mikrofon in Form einer gesprochenen Sprache eingegeben werden. Die Anfrage wird in einem Eingabefeld 50 des Bildschirms der Mensch-Maschine-Schnittstelle 17 dargestellt.

Bei einem folgenden Schritt wird die Anfrage (Search Request Message) an die Programmierschnittstelle 41 des ersten Rechensystems 3 übergeben. Liegt die Anfrage in Form eines geschriebenen Textes vor, so wird die Anfrage an ein Erkennungsprogramm 40 übergeben. Im Erkennungsprogramm 40 werden aus dem Text eine Funktion (Intent) und falls vorhanden ein Inhalt (Entity) für die Funktion, der die Funktion genauer spezifiziert, herausgefiltert. Die Funktion kann z.B. eine Suchfunktion zu Informationen über die Anlage, eine Steuerfunktion zum Steuern der Anlage, eine Überwachungsfunktion zum Überwachen der Anlage sein. Der Inhalt kann z.B. angeben, welche Information über die Anlage gesucht wird. Zudem kann der Inhalt angeben, welche Funktion der Anlage gesteuert werden soll und insbesondere wie die Funktion der Anlage gesteuert werden soll. Zudem kann der Inhalt angeben, welcher Teil der Anlage in Bezug auf welchen Parameter überwacht werden soll. Dazu verfügt das Erkennungsprogramm über ein Datenmodell von vorgegebenen Texten, die vorgegebenen Funktionen zugeordnet sind. Der eingegebene Text wird mit den abgespeicherten vorgegebenen Texten verglichen. Aus dem Vergleich wird wenigstens ein vorgegebener Text als mit dem eingegebenen Text übereinstimmend erkannt. Zudem wird die Funktion ermittelt, die dem übereinstimmenden vorgegebenen Text zugeordnet ist. Das Datenmodell zur Ermittlung einer Funktion und eines Inhalts kann zuvor experimentell ermittelt worden sein.

Das Datenmodell ist als trainiertes neuronales Netz ausgebildet. Das neuronale Netz ist trainiert und ausgebildet, um eine Funktion und/oder einen Inhalt der Funktion zu ermitteln. Zudem kann das neuronale Netz ausgebildet sein, um das weitere Rechensystem und/oder die Sensorvorrichtung und/oder die Mensch-Maschine-Schnittstelle und/oder das Anwendungsprogramm zu ermitteln, die die gesuchte Funktion und den gesuchten Inhalt, d.h. die mit der Anfrage gesuchte Information liefern können.

Zudem kann die künstliche Intelligenz ausgebildet sein, um die Funktion eines Anwendungsprogrammes und, falls vorhanden, einen Inhalt, der mit der Funktion ermittelt werden soll, zu ermitteln, damit die mit der Anfrage gesuchte Information geliefert werden kann. Die künstliche Intelligenz kann in Form von Hardware und/oder Software realisiert sein. Beispielsweise kann als Erkennungsprogramm ein RASA NLU Programm verwendet werden.

Liegt die Anfrage in Form einer gesprochenen Sprache vor, so wird die Anfrage an ein Erkennungsprogramm 40 übergeben, mit dem Spracheingaben verarbeitet werden können. Im Erkennungsprogramm 40 werden aus der gesprochenen Anfrage eine Funktion (Intent) und, falls vorhanden, ein Inhalt (Entity), der die Funktion genauer spezifiziert, herausgefiltert. Das Erkennungsprogramm kann, wie oben erläutert, auch in Form einer künstlichen Intelligenz, insbesondere in Form eines trainierten neuronalen Netzes ausgebildet sein. Die Funktion kann z.B. eine Suchfunktion, eine Steuerfunktion, eine Überwachungsfunktion sein. Der Inhalt kann z.B. angeben, welche Information über die Anlage gesucht wird. Zudem kann der Inhalt angeben, welche Funktion der Anlage wie gesteuert werden soll. Zudem kann der Inhalt angeben, welcher Teil der Anlage in Bezug auf welchen Parameter überwacht werden soll. Dazu verfügt die Spracherkennung über ein Datenmodell von vorgegebenen Spracheingaben, die vorgegebenen Funktionen zugeordnet sind. Die eingegebene Spracheingabe wird mit den abgespeicherten vorgegebenen Spracheingaben verglichen. Aus dem Vergleich wird wenigstens eine vorgegebene Spracheingabe als mit der eingegebenen Spracheingabe übereinstimmend erkannt. Zudem wird die Funktion ermittelt, die der übereinstimmenden vorgegebenen Spracheingabe zugeordnet ist. Das Datenmodell für die Spracheingabe zur Ermittlung einer Funktion und eines Inhalts kann zuvor experimentell ermittelt worden sein. Beispielsweise kann als Spracherkennung ein RASA NLU Programm verwendet werden.

Zudem kann das Erkennungsprogramm ausgebildet sein, um zusätzlich zu der ermittelten Funktion (Intent) eine Wahrscheinlichkeit dafür anzugeben, dass das ermittelte Anwendungsprogramm und/oder die ermittelte Funktion der Anfrage richtig zugeordnet werden konnte. Bei der Verwendung einer künstlichen Intelligenz, wie bei dem RASA NLU Programm, wird für das ermittelte Ergebnis zusätzlich eine Wahrscheinlichkeit dafür angeben, dass die Zuordnung richtig ist. Somit können für eine Anfrage mehrere weitere Anwendungsprogramme und/oder Funktionen mit verschiedenen Wahrscheinlichkeiten ermittelt werden. Bei dem weiteren Verfahren werden zuerst das oder die Anwendungsprogramme und/oder Funktionen mit der höheren Wahrscheinlichkeit ausgeführt, um die gesuchte Information möglichst schnell und mit möglichst wenig Aufwand zu erhalten. Somit können mehrere Anwendungsprogramme und/oder Funktionen ausgeführt werden, um die gesuchte Information zu erhalten.

Bei einem folgenden Programmpunkt werden die ermittelte Funktion (Intent) und, falls vorhanden, wenigstens ein ermittelter Inhalt (Entity) der Funktion an das erste Rechensystem 3 übergeben. Der Inhalt kann z.B. auch wenigstens einen Parameter der Funktion darstellen. Beispielsweise kann der Parameter einen Steuerwert eines Steuerungsprogrammes der Anlage oder einen Parameter einer gewünschten Information darstellen. Der ermittelte Inhalt kann z.B. ein Parameter der ermittelten Funktion sein. In dem vorliegenden Beispiel wird als ermittelte Funktion "Suche Beispiele" an das erste Rechensystem 3 übermittelt. Das erste Rechensystem 3 vergleicht die erkannte Funktion "Suche Beispiele" mit einem vorgegebenen Datenmodell. Das Datenmodell beinhaltet Zuordnungen zwischen vorgegebenen Funktionen und vorgegebenen Anwendungsprogrammen. In diesem Beispiel ermittelt das erste Rechensystem 3 aufgrund des vorgegebenen Datenmodells das achte Anwendungsprogramm 38, das in der Lage ist, Beispiele zu suchen. Das erste Rechensystem 3 gibt die Anfrage " Suche Beispiele" über die zweite Schnittstelle 25 an das achte Anwendungsprogramm 38 weiter. Die zweite Schnittstelle 25 verwendet z.B. einen Message Broker zur Kommunikation mit dem achten Anwendungsprogramm 38.

Der Message Broker der zweiten Schnittstelle übermittelt die Anfrage als TApp Request Message an das achte Anwendungsprogramm 38. Das achte Anwendungsprogramm 38 sucht gemäß der empfangenen Anfrage nach entsprechenden Beispielen in entsprechenden Datenbanken, auf die das achte Anwendungsprogramm zugreifen kann. Das achte Anwendungsprogramm 38 liefert gefundene Beispiele z.B. in Form von Daten oder Bilder als Antwort über den Message Broker 25 an die zweite Schnittstelle 25 des Rechensystems 3 zurück. Zudem oder anstelle der gefundenen Beispiele selbst können auch Speicheradressen wie z.B. Internetadressen für die gefundenen Beispiele an das Rechensystem übermittelt werden. Mithilfe des Message Brokers werden die gefundenen Beispiele und/oder die Speicheradressen über die Programmierschnittstelle 41 zurück an die Mensch-Maschine-Schnittstelle 17 in Form einer Antwort gesendet. Die Mensch-Maschine-Schnittstelle 17 stellt die übermittelten Beispiele, insbesondere die Bilder der Anlage und/oder die Speicheradressen und/oder die Speicheradressen in einem Anzeigefenster 58 dar. Abhängig von der gewählten Ausführung kann sich die Mensch-Maschine-Schnittstelle 17 anhand der Speicheradresse die Beispiele selbst holen und darstellen.

FIG 4 zeigt in einer schematischen Darstellung einen Programmablauf zur Ermittlung von Informationen über die Anlage 2 und/oder die Steuerung der Anlage 2 mithilfe einer Anfrage über die Mensch-Maschine-Schnittstelle 17. Dabei wird von einer Bedienperson eine Anfrage über ein Mikrofon in die Mensch-Maschine-Schnittstelle 17 eingegeben. Die Anfrage lautet: Zeige mir Bilder einer Walzanlage. Die gesprochene Anfrage 51 wird von der Mensch-Maschine-Schnittstelle 17 über die Programmierschnittstelle 41 an das Rechensystem 3 übergeben. Die Programmierschnittstelle 41 gibt die Anfrage 51 an das Erkennungsprogramm 40 weiter. Das Erkennungsprogramm verfügt über eine Spracherkennung und ist beispielsweise als künstliche Intelligenz, insbesondere als trainiertes neuronales Netz ausgebildet. Beispielsweise ist die künstliche Intelligenz in Form eines Rasa-NLU Programms implementiert.

Anstelle der Anfrage in Form eines Sprachsignals kann die Anfrage auch in Form eines Textes und/oder einer Grafik und/oder eines Bildes vorliegen.

Das Erkennungsprogramm 40 ermittelt, wie oben beschrieben, anhand der Anfrage eine Funktion und, falls möglich, einen Inhalt, der mit der Funktion gesucht werden soll. Die Funktionen entsprechen den Anwendungsprogrammen, die den Rechensystemen, den Mensch-Maschine-Schnittstellen und/oder den Sensorvorrichtungen zur Verfügung stehen oder über eine Netzwerkverbindung verfügbar sind. Die Funktionen können auch nur einen Teil eines Anwendungsprogrammes darstellen. Insbesondere kann ein Anwendungsprogramm verschiedene Funktionen aufweisen. Mit jeder Funktion können beispielsweise verschiedene Inhalte gesucht werden.

Das Erkennungsprogramm verwendet beispielsweise ein erstes Datenmodell, das für mehrere weitere Rechensystems und/oder Sensorvorrichtungen und/oder Mensch-Maschine-Schnittstellen und/oder weitere Anwendungsprogramme vorgesehen ist. Das Erkennungsprogramm ermittelt anhand der Anfrage und mithilfe des ersten Datenmodells das wenigstens eine weitere Rechensystem und/oder die wenigstens eine Sensorvorrichtung und/oder die wenigstens eine Mensch-Maschine-Schnittstelle und/oder das wenigstens eine Anwendungsprogramm, die die mit der Anfrage gesuchte Information liefern kann.

Das erste Datenmodell weist für die weiteren Rechensysteme und/oder die Sensorvorrichtungen und/oder die Mensch-Maschine-Schnittstellen und/oder das weitere Anwendungsprogramm festgelegte Beispiele, insbesondere Beispielsätze, für Anfragen auf, mit denen nach Informationen in den weiteren Rechensystemen und/oder in den Sensorvorrichtungen und/oder in den Mensch-Maschine-Schnittstellen und/oder weiteren Anwendungsprogrammen erfolgreich gesucht werden kann.

Das erste Datenmodell kann mithilfe künstlicher Intelligenz, insbesondere als trainiertes neuronales Netz ausgebildet sein. Die künstliche Intelligenz ist ausgebildet, um anhand der Anfrage das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern kann.

Beispielsweise kann das erste Datenmodell als trainiertes neuronales Netz ausgebildet sein, das für die Anwendungsprogramme "Zeige ein Bild der Anlage" und/oder für das Anwendungsprogramm "Suche ein Dokument der Anlage" mit folgenden Beispielsätzen trainiert wurde.

Für das Anwendungsprogramm "Zeige ein Bild der Anlage" wurden folgende Beispielsätze für das Training des neuronalen Netzes verwendet:
- Zeige mir ein Foto einer Walzstraße.
- Ich möchte mir Bilder einer Warmbandstraße ansehen.
- Gibt es Abbildungen eines Hochofens?
- Ich interessiere mich für ein Video über die Fertigstraße.

Für das Anwendungsprogramm "Suche ein Dokument der Anlage" wurden folgende Beispielsätze für das Training des neuronalen Netzes verwendet:
- Ich benötige die mechanische Zeichnung des Fertiggerüsts.
- Zeige mir das Datenblatt des Motors.

Als Antwort 52 übermittelt das Erkennungsprogramm ein Anwendungsprogramm, mit dem die Anfrage 51 abgearbeitet werden kann.

In diesem Fall wird als Antwort 52 das fünfte Anwendungsprogramm "Plant Visuals" an das dritte Rechensystem 3 übergeben.

Daraufhin erstellt das dritte Rechensystem 3 eine zweite Anfrage 52 mit der Anfrage "Zeige mir ein Bild einer Walzanlage" mit dem fünften Anwendungsprogramm "Plant Visuals" an. Die zweite Anfrage 52 wird wiederum an das Erkennungsprogramm 40 übergeben. Die zweite Anfrage enthält die gleiche Anfrage "Zeige mir ein Bild einer Walzanlage" wie die erste Anfrage und zusätzlich den Hinweis, dass die Anfrage mithilfe des fünften Anwendungsprogramms "Plant Visuals" ausgeführt werden soll.

Das Erkennungsprogramm verfügt über zweite Datenmodelle, wobei ein zweites Datenmodell jeweils für ein weiteres Rechensystem oder eine Sensorvorrichtung oder eine Mensch-Maschine-Schnittstelle oder ein weiteres Anwendungsprogramm vorgesehen ist. Somit kann für jedes weitere Rechensystem und/oder jede Sensorvorrichtung und/oder jede Mensch-Maschine-Schnittstelle und/oder jedes weitere Anwendungsprogramm jeweils ein eigenes zweites Datenmodell vorgesehen sein.

Das Erkennungsprogramm ermittelt anhand des zweiten Datenmodells des fünften Anwendungsprogrammes "Plant Visuals" und der Anfrage "Zeige mir ein Bild einer Walzanlage" mit welcher Funktion des fünften Anwendungsprogrammes und mit welchem Inhalt die gesuchte Information ermittelt werden kann.

Das zweite Datenmodell ist beispielsweise als künstliche Intelligenz, insbesondere als trainiertes neuronales Netz ausgebildet, wobei die künstliche Intelligenz ausgebildet ist, um das Anwendungsprogramm des weiteren Rechensystems und/oder der Sensorvorrichtung und/oder der Mensch-Maschine-Schnittstelle und/oder um die Funktion und insbesondere den Inhalt der Funktion des Anwendungsprogramms zu ermitteln, die die gesuchte Information liefern können. Das zweite Datenmodell kann mithilfe des Programms RASA NLU Programm realisiert sein. Das zweite Datenmodell weist für das fünfte Anwendungsprogramm festgelegte Beispiele, insbesondere Beispielsätze, für Anfragen auf, mit denen mithilfe von Funktionen des fünften Anwendungsprogrammes und vorzugsweise Inhalte von Funktionen des fünften Anwendungsprogrammes erfolgreich nach Informationen in den weiteren Rechensystemen und/oder in den Sensorvorrichtungen und/oder in den Mensch-Maschine-Schnittstellen und/oder weiteren Anwendungsprogrammen gesucht werden kann.

Das zweite Datenmodell kann mithilfe eines trainierten neuronalen Netzes ausgebildet sein. Das zweite Datenmodell für das Anwendungsprogramm "Zeige ein Bild der Anlage" kann mit folgenden Beispielsätzen für die Funktion "Zeige ein Bild" und die Funktion "Zeige ein Video" trainiert worden sein:
Für die Funktion (Intent) "Zeige ein Bild" werden folgende Beispielsätze für das Training des neuronalen Netzes verwendet:
Zeige mir ein Foto einer [Walzstraße] (asset)
Ich möchte mir Bilder einer [Warmbandstraße] (asset) ansehen Gibt es Abbildungen eines [Hochofens] (asset)
In den eckigen Klammern ist der Inhalt (Entity) der Funktion und in den gebogenen Klammern der Typ des Inhalts (Entity) angegeben. Mithilfe der Typen können die Inhalte noch mal unterschieden bzw. klassifiziert werden.

Für die Funktion (Intent) "Zeige ein Video" werden folgende Beispielsätze für das Training des neuronalen Netzes verwendet:
Ich interessiere mich für ein Video über die [Fertigstraße] (asset)
In die eckigen Klammern ist der Inhalt (Entity) der Funktion und in den gebogenen Klammern ist der Typ des Inhalts angegeben.

Das zweite Datenmodell kann mithilfe eines trainierten neuronalen Netzes ausgebildet sein. Das zweite Datenmodell für das Anwendungsprogramm "Suche ein Dokument der Anlage" kann mit folgenden Beispielsätzen trainiert worden sein:
Für die Funktion (Intent) " Zeige ein Dokument" werden folgende Beispielsätze für das Training des neuronalen Netzes verwendet:
Ich benötige die [mechanische Zeichnung] (dokument-type) des [Fertiggerüsts] (asset)
Zeige mir das [Datenblatt] (dokument-type) des [Motors] (asset)

In den eckigen Klammern ist der Inhalt (Entity) der Funktion und in den gebogenen Klammern der Typ des Inhaltes angegeben. In den genannten Beispielsätzen sind jeweils zwei Inhalte mit unterschiedlichen Typen angegeben.

In analoger Weise können auch neuronale Netze für andere Anwendungsprogramme trainiert werden, die insbesondere eine Steuerung oder eine Überwachung der Anlage durchführen.

Das Erkennungsprogramm 40 ermittelt aufgrund der zweiten Anfrage 52 und des zweiten Datenmodells als Funktion "Suche ein Bild" und als Inhalt "Walzanlage".

Diese Information wird als zweite Antwort 54 zurück an das Assistentenprogramm 30 des ersten Rechensystems 3 gegeben. Das Assistentenprogramm des Rechensystems 3 erstellt aufgrund der übermittelten Funktion "Suche ein Bild" und den Inhalt "Walzanlage" eine dritte Anfrage 55, die mithilfe des Message Brokers an das fünfte Anwendungsprogramm 35 mit der Funktion übermittelt wird, ein Bild für ein Walzwerk zu suchen.

Das fünfte Anwendungsprogramm 35 sucht nach Erhalt der Anfrage nach Bildern von Walzwerken in angeschlossenen Datenspeichern. Werden Bilder von Walzwerken von dem fünften Anwendungsprogramm 35 gefunden, so werden diese Bilder als dritte Antwort 56 vom fünften Anwendungsprogramm 35 zurück an das erste Rechensystem 3 gesendet. Aufgrund der dritten Antwort 56 erstellt das erste Rechensystem 3 eine vierte Antwort 57, die an die Mensch-Maschine-Schnittstelle 17 übertragen wird. Die dritte Antwort 57 enthält wenigstens ein Bild eines Walzwerkes. Die Mensch-Maschine-Schnittstelle 17 empfängt die dritte Antwort 56 und stellt das wenigstens eine übermittelte Bild auf einem Bildschirm dar.

Abhängig von der gewählten Ausführungsform können gemäß den Figuren 2 und 3 nicht nur die Mensch-Maschine-Schnittstelle 17 Anfragen an das erste Rechensystem 3 senden, sondern es können auch z.B. das zweite, dritte, vierte und/oder fünfte Rechensystem 4, 5, 6, 18 und/oder die Sensorvorrichtungen und/oder Anwendungsprogramme Anfragen an das erste Rechensystem 3 übermitteln. Das erste Rechensystem 3 verarbeitet Anfragen der weiteren Rechensysteme 4, 5, 6, 18 in der gleichen Weise wie Anfragen der Mensch-Maschine-Schnittstelle und/oder der Anwendungsprogramme und gibt Antworten auf die Anfragen entsprechend zurück. Auf diese Weise können Informationen zwischen den Rechensystemen, Sensorvorrichtungen und Anwendungsprogrammen, die mit dem ersten Rechensystem 3 in Verbindung stehen, auf einfache Weise ausgetauscht werden.

Zudem kann das beschriebene computerimplementierte Verfahren auch dazu verwendet werden, um eine Anfrage mithilfe verschiedener Anwendungsprogramme und/oder Rechensysteme und/oder Sensorvorrichtungen und/oder Mensch-Maschine-Schnittstellen zu beantworten, insbesondere die Anlage zu steuern.

Beispielsweise können für Anfragen, die eine Steuerung der Anlage bewirken, in analoger Weise Modelle, insbesondere trainierte neuronale Netze verwendet werden, um die Anwendungsprogramme zu finden, die die Anfragen ausführen können. Nach der Ermittlung der Anwendungsprogramme, die die Anfragen ausführen können, werden die in den Anfragen enthaltenen Steuerbefehle an die ermittelten Anwendungsprogramme übergeben, um die Anlage entsprechend zu steuern.

Hier ein paar Beispiele für Anfragen, die eine Steuerung der Anlage durchführen, bei denen ein erstes und ein zweites Datenmodell verwendet werden, um die passenden Anwendungsprogramme zu ermitteln, die die Anfrage ausführen können. Das erste und/oder das zweite Datenmodell sind beispielsweise als trainierte neuronale Netze ausgebildet.

Ein Beispiel für eine steuernde Anfrage lautet: Reduziere die Biegekraft in Gerüst F3 der Anlage um 100kN.

Mithilfe des ersten Datenmodells wird anhand der Anfrage die Funktion Steuerung (insbesondere eine Level 2 Steuerung) der Anlage ermittelt. Somit ist das Anwendungsprogramm, das die Anfrage ausführen kann, das Steuerungsprogramm der Anlage. Das zweite Datenmodell für das Steuerungsprogramm der Anlage ermittelt anhand der Anfrage die Funktion ,Reduziere' (Stellglied der Anlage) und die Inhalte: Biegekraft (= konkretes Stellglied), Gerüst F3 (asset), 100kN (value). In den Klammern sind Typen der Inhalte angegeben.

Somit wird dem Steuerungsprogramm die Aufgabe übergeben, im Gerüst F3 der Anlage das entsprechende Stellglied in der Weise anzusteuern, dass die Biegekraft um 100 kN reduziert wird.

Ein zweites Beispiel für eine steuernde Anfrage lautet: Markiere das aktuelle Produkt, insbesondere ein Band, in der Fertigstraße, insbesondere in einer Walzanlage, für eine Qualitätsanalyse.

Das erste Datenmodell erkennt anhand der Anfrage als Funktion eine ,Qualitätsüberwachung', die das zuständige Anwendungsprogramm darstellt.

Das zweite Datenmodell für das Anwendungsprogramm Qualitätsüberwachung erkennt anhand der Anfrage die Funktion ,Überprüfung' mit dem Inhalt "aktuelle" (Uhrzeit: NOW) und dem Inhalt "Band" (asset). In den Klammern sind Typen der Inhalte angegeben. Das Anwendungsprogramm Qualitätsüberwachung wird ein weiteres Anwendungsprogramm, z.B. ein Anlagen-Tracking Programm, anfragen, um das aktuelle Produkt zu markieren. Die Markierung dient dazu, um anhand der Markierung das aktuelle Produkt später zu erkennen und dann das markierte Produkt analysieren zu können.

Ein drittes Beispiel für eine steuernde Anfrage lautet: Gib mir Informationen über das aktuelle Band der Anlage.

Das erste Datenmodell erkennt anhand der Anfrage als Funktion ein Anlagen-Tracking, das das zuständige Anwendungsprogramm darstellt.

Das zweite Datenmodell für das Anwendungsprogramm Anlagen-Tracking erkennt anhand der Anfrage als Funktion ,Bandinformationen' mit dem Inhalt: aktuell (Uhrzeit ,NOW') Somit können die Informationen zu dem aktuellen Band mithilfe des Anwendungsprogramms Anlagen-Tracking aus einem entsprechenden Datenspeicher abgefragt oder anhand von aktuellen Sensordaten von Sensoren der Anlage ermittelt werden.

Beispielsweise kann ein angefragtes Anwendungsprogramm oder ein angefragtes Rechensystem und/oder eine angefragte Sensorvorrichtung und/oder eine angefragte Mensch-Maschine-Schnittstelle als Antwort auf eine Anfrage nach einer Information eine weitere Anfrage nach einer weiteren Information über die Anlage an das erste Rechensystem 3 zurücksenden, von dem die Anfrage übermittelt wurde. Das erste Rechensystem ermittelt dann anhand der weiteren Anfrage beispielsweise mithilfe des Erkennungsprogramms 40, welches weitere Rechensystem 4, 5, 6, 18 und/oder welche Sensorvorrichtung 11, 12, 13 und/oder welche Mensch-Maschine-Schnittstelle 17 die weitere Anfrage beantworten kann. Dann holt das erste Rechensystem 3 über die Schnittstelle 24, 25 die angefragte weitere Information von dem wenigstens einen ermittelten weiteren Rechensystem 4, 5, 6, 18 und/oder von der wenigstens einen ermittelten Sensorvorrichtung 11, 12, 13 und/oder von der wenigstens einen ermittelten Mensch-Maschine-Schnittstelle 17 ein. Das erste Rechensystem 3 gibt die eingeholte weitere Information über die Schnittstelle 24, 25 an das anfragende weitere Rechensystem 4, 5, 6, 18 und/oder an die anfragende Sensorvorrichtung 11, 12, 13 der Anlage und/oder an die anfragende Mensch-Maschine-Schnittstelle 17 weiter. Das anfragende weitere Rechensystem 4, 5, 6, 18 und/oder an die anfragende Sensorvorrichtung 11, 12, 13 der Anlage und/oder an die anfragende Mensch-Maschine-Schnittstelle 17 verarbeiten die weitere Information, um z.B. die angefragte Information zu ermitteln und geben die angefragte Information dann an das erste Rechensystem weiter. Somit kann eine angefragte Information mithilfe mehrerer weitere Rechensysteme 4, 5, 6, 18 und/oder Sensorvorrichtungen 11, 12, 13 der Anlage und/oder Mensch-Maschine-Schnittstellen 17 erstellt werden.

Das in FIG 4 beschriebene Beispiel zeigt eine Freifeld-Sucheingabe, bei der ein Erkennungsprogramm 40 aufgerufen wird, um herauszufinden, welches Anwendungsprogramm (App) zur Durchführung der Anfrage infrage kommt. Das Erkennungsprogramm ruft ein erstes Datenmodell auf, in dem Beispielsätze für wenigstens einen Teil, insbesondere für alle verfügbaren Anwendungsprogramme enthalten sind.

Die Anfrage wird mit festgelegten Beispielen, insbesondere Beispielsätzen des ersten Datenmodells verglichen. Das Beispiel, insbesondere der Beispielsatz, des ersten Datenmodells, das nach vorgegeben Regeln die beste Übereinstimmung mit der Anfrage aufweist, wird ausgewählt. Die vorgegebenen Regeln können das Beispiel, insbesondere den Beispielsatz auswählen, das die beste Übereinstimmung, insbesondere die größte Anzahl der übereinstimmenden Wörter mit der Anfrage aufweist. Das zum ausgewählten Beispiel, insbesondere Beispielsatz, gehörende Anwendungsprogramm wird an das erste Rechensystem 3 zurückgemeldet. Abhängig von der gewählten Ausführung können auch mehr als ein Anwendungsprogramm mit einer Angabe für die Qualität der Übereinstimmung an das erste Rechensystem übermittelt werden.

Die Beispiele, insbesondere die Beispielsätze, für die einzelnen Anwendungsprogramme können mithilfe einer künstlichen Intelligenz, insbesondere mithilfe eines trainierten neuronalen Netzes bestimmt worden sein. Zudem können der Vergleich der Anfrage mit den Beispielsätzen des ersten Datenmodells und die Ermittlung des oder der am besten mit der Anfrage übereinstimmenden Beispiele, insbesondere Beispielsätze, mithilfe einer künstlichen Intelligenz, insbesondere mithilfe eines trainierten neuronalen Netzes ermittelt werden. Die künstliche Intelligenz kann zusätzlich eine Wahrscheinlichkeit der Übereinstimmung der Beispiele mit der Anfrage ermitteln. Die Wahrscheinlichkeiten werden mit den ausgewählten Beispielen, insbesondere den Beispielsätzen, und den zugeordneten Anwendungsprogrammen an die erste Recheneinheit übergeben.

Zudem kann für die Anfrage mithilfe eines trainierten neuronalen Netzes eines oder mehrere der weiteren Anwendungsprogramme ermittelt werden, mit denen die Anfrage mit der größten Wahrscheinlichkeit ausgeführt bzw. beantwortet werden kann. Die künstliche Intelligenz kann zusätzlich eine Wahrscheinlichkeit dafür ausgeben, wie gut sich die mithilfe des neuronalen Netzes bestimmten Anwendungsprogramme für die Ausführung der Anfrage eignen.

Vorzugsweise wird nur das Anwendungsprogramm mit der höchsten Wahrscheinlichkeit für den zweiten Schritt mit dem zweiten Datenmodell verwendet. Zudem können auch die Anwendungsprogramme für den zweiten Schritt mit den zweiten Datenmodellen verwendet werden, deren Wahrscheinlichkeiten einen vorgegebenen Wert überschreiten.

Die mithilfe des ersten Datenmodells bestimmten Anwendungsprogramme und vorzugsweise die zu den bestimmten Anwendungsprogrammen gehörenden Wahrscheinlichkeiten, die angeben, wie gut das Anwendungsprogramm auf die Suchanfrage, d.h. die Anfrage, passt, werden als Liste an das erste Rechensystem 3, insbesondere an das Assistentenprogramm 30 zurückgegeben.

In dem beschriebenen Beispiel erkennt das Erkennungsprogramm, dass nach Bildern gefragt wurde, und daher das Anwendungsprogramm Plant Visuals zur Suche zu verwenden ist. Ein konkretes Beispiel für eine NLU Programm ist das Rasa-NLU Programm, das unter Verwendung einer künstlichen Intelligenz, insbesondere unter Verwendung eines trainierten neuronalen Netzes realisiert ist.

Für jedes Anwendungsprogramm der zurückgegebenen Liste wird erneut das Erkennungsprogramm aufgerufen mit der gleichen Anfrage und mit einem zweiten Datenmodell, das für das jeweilige Anwendungsprogramm vorgesehen ist. Das zweite Datenmodell weist weitere festgelegte Beispiele, insbesondere Beispielsätze, auf, die speziell für das entsprechende Anwendungsprogramm festgelegt sind. Jedes Beispiel, insbesondere jeder Beispielsatz, des zweiten Datenmodells kann einer bestimmten Funktion des Anwendungsprogrammes zugeordnet sein. Ein Anwendungsprogramm kann auch nur eine Funktion aufweisen.

Das zweite Datenmodell ist beispielsweise als künstliche Intelligenz, insbesondere als trainiertes neuronales Netz ausgebildet, wobei die künstliche Intelligenz ausgebildet ist, um wenigstens eine Funktion zu ermitteln, die die Anfrage ausführen kann bzw. die mit der Anfrage gesuchte Information liefern kann. Zudem kann das neuronale Netz eine Wahrscheinlichkeit für die ermittelte Funktion ausgeben, die angibt, wie gut die Funktion für die Ausführung der Anfrage geeignet ist. Das zweite Datenmodell kann z.B. mithilfe des RASA NLU Programm realisiert sein.

Die Beispiele, insbesondere die Beispielsätze, für jedes zweite Datenmodell, das nur für ein Anwendungsprogramm vorgesehen ist, können mithilfe einer künstlichen Intelligenz, insbesondere mithilfe eines trainierten neuronalen Netzes bestimmt worden sein. Zudem können der Vergleich der Anfrage mit den festgelegten Beispielen, insbesondere mit den Beispielsätzen, des zweiten Datenmodells und die Ermittlung des oder der am besten mit der Anfrage übereinstimmenden Beispiele, insbesondere Beispielsätze, mithilfe einer künstlichen Intelligenz, insbesondere mithilfe eines trainierten neuronalen Netzes ermittelt worden sein. Die künstliche Intelligenz gibt zusätzlich eine Wahrscheinlichkeit der Übereinstimmung der Beispiele, insbesondere der Beispielsätze, mit der Anfrage aus. Die Wahrscheinlichkeiten werden mit den, den ausgewählten Beispielen, insbesondere den Beispielsätzen, zugeordneten Anwendungsprogrammen, an die erste Recheneinheit übergeben.

Das Erkennungsprogramm kann für jedes Anwendungsprogramm ein eigenes trainiertes zweites Datenmodell, insbesondere ein trainiertes neuronales Netz, aufweisen. Das zweite Datenmodell kann beispielsweise für jede in dem Anwendungsprogramm verfügbare Funktion Beispielsätze mit verschiedenen Grammatiken und Wörtern aufweisen. Somit kann ein Mapping zwischen der Anfrage und der jeweiligen Funktion des jeweiligen Anwendungsprogrammes erstellt werden.

Zurückgeliefert werden von dem Erkennungsprogramm an die erste Recheneinheit der Name der in dem Anwendungsprogramm aufzurufenden Funktion bzw. eine Liste von Funktionen mit ihren Wahrscheinlichkeiten und vorzugsweise zusätzlichen Informationen wie Inhalte, Parameter usw. die die Ausführung der Funktion präziser beschreiben. Fehlen diese Informationen, dann kann z.B. eine Rückfrage an die Mensch-Maschine-Schnittstelle und damit an die Bedienperson erfolgen, um die fehlenden Inhalte und Parameter nachzufragen.

In dem Beispiel der FIG 4 erkennt das Erkennungsprogramm mithilfe des für Plant Visuals trainierten Datenmodells, dass die Funktion "Suche ein Bild" aufgerufen werden soll. Die zusätzliche Information ist hier "Walzanlage".

Das Assistentenprogramm 30 sendet eine Nachricht über den Message Broker an das fünfte Anwendungsprogramm Plant Visuals mit den extrahierten Informationen. In dem Anwendungsprogramm Plant Visuals wird die Funktion "Suche ein Bild" mit der zusätzlichen Information " für eine Walzanlage" aufgerufen. Als Antwort wird eine Liste von Bildern einer Walzanlage an das Assistentenprogramm übermittelt. Das Assistentenprogramm empfängt die Antwort über den Message Broker, in unserem Fall eine Liste von Bildern einer Walzanlage. Das Assistentenprogramm übermittelt als Antwort auf die gestellte Anfrage die Liste von Bildern der Walzanlage an die Mensch-Maschine-Schnittstelle 17.

Alternativ kann die Suchanfrage auch von einem Anwendungsprogramm, insbesondere von einem Anwendungsprogramm eines weiteren Rechensystems an das Assistentenprogramm übermittelt werden. Beispielsweise kann die Anfrage durch ein anderes Anwendungsprogramm auch über den Message Broker direkt an das Assistentenprogramm gesendet werden, ohne dass eine Programmierschnittstelle verwendet werden muss. Dabei können drei Möglichkeiten für die Suchanfrage auftreten. Beispielsweise kann es unbekannt sein, welches Anwendungsprogramm gefragt werden soll, wenn der Suchtext ein Freitext ist. Dabei wird wie oben verfahren und zuerst das Anwendungsprogramm mithilfe des ersten Datenmodells ermittelt. Weiterhin kann es bereits bekannt sein, welches Anwendungsprogramm gefragt werden soll, aber es ist nicht bekannt, welche Funktion innerhalb des Anwendungsprogrammes aufgerufen werden soll und welche zusätzlichen Informationen vorliegen. Entsprechend werden nur die oben bereits beschriebenen Schritte für das zweite Datenmodell des bekannten Anwendungsprogramms durchgeführt. Weiterhin kann bereits bekannt sein, welches Anwendungsprogramm gefragt werden soll, welche Funktion aufgerufen werden soll und welche zusätzlichen Informationen berücksichtigt werden sollen. Im Rahmen einer solchen Suchanfrage können einzelne Anwendungsprogramme wiederum auch zusätzliche Informationen bei anderen Anwendungsprogrammen anfragen, wie bereits oben beschrieben. Weiterhin ist jedoch sichergestellt, dass die Verkettung der Suchanfragen terminiert ist.

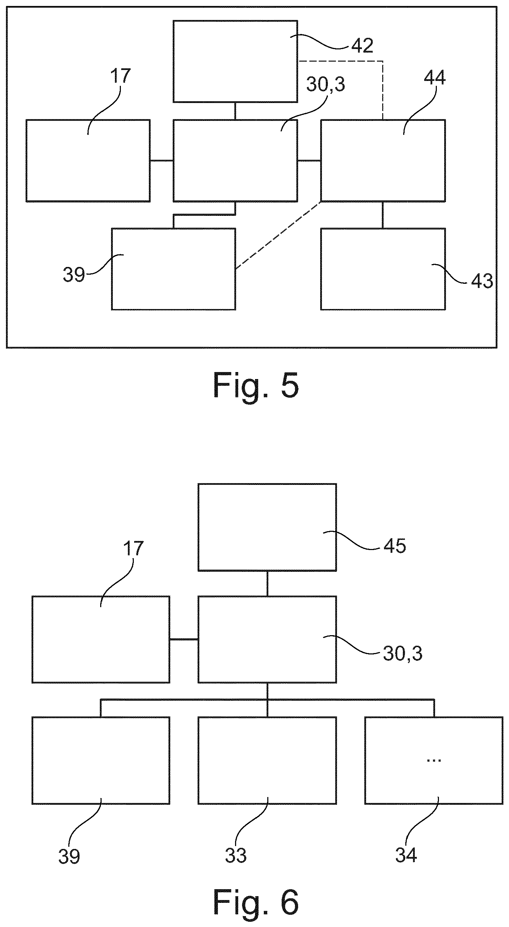

FIG 5 zeigt in einer schematischen Darstellung eine Struktur für Rechensysteme einer Anlage 2. Dabei ist das erste Rechensystem 3, insbesondere das Assistentenprogramm 30 des ersten Rechensystems mit einer Anlagenautomatisierung 39 verbunden, die ebenfalls ein Rechensystem aufweist. Weiterhin steht das erste Rechensystem 3, insbesondere das Assistentenprogramm 30 des ersten Rechensystems mit einer Mensch-Maschine-Schnittstelle 17 in Verbindung. Zudem sind Sensorvorrichtungen in Form von Kameras 44 sowohl mit dem ersten Rechensystem 3, insbesondere mit dem Assistentenprogramm 30 des ersten Rechensystems als auch beispielsweise mit der Anlagenautomatisierung 39 verbunden. Weiterhin ist ein Anzeigesystem 43 beispielsweise in Form von Monitoren vorgesehen, das direkt mit den Kameras 44 verbunden ist. Weiterhin ist ein Anwendungsprogramm in Form einer interaktiven Bedienerführung 42 vorgesehen, das mit dem ersten Rechensystem 3, insbesondere mit dem Assistentenprogramm 30 des ersten Rechensystems in Verbindung steht. Zudem kann die interaktive Bedienerführung 42 auch direkt mit der Kamera 44 verbunden sein.

Die Programmstruktur der FIG 5 weist den Vorteil auf, dass die Anlage 2 mit weniger Personal und von einem Steuerraum aus, der keinen direkten Blick auf die Anlage ermöglicht, gesteuert werden kann. Auf diese Weise können in einem Steuerraum mehrere Steuerbühnen auch von mehreren Anlagen zusammengefasst werden. Somit können mehrere Anlagen gleichzeitig von einem Steuerraum aus gefahren werden. Zudem können die Steuerzentren und die Steuerräume auch entfernt und unabhängig von dem Standort der Anlage angeordnet sein.

Um ein Fahren der Anlage, das heißt ein Betreiben der Anlage für eine Bedienperson zu ermöglichen, sind Bildschirme in Form von Mensch-Maschine-Schnittstellen 17 vorgesehen, die über Kameras 44 einen Blick auf interessante Abschnitte der Anlage ermöglichen. Zudem bieten die Mensch-Maschine-Schnittstelle 17 Bedienbildschirme, um einen Überblick über die Anlagenautomatisierung zu haben. Zudem können über die Bedienbildschirme der Mensch-Maschine-Schnittstelle Änderungen in der Anlagenautomatisierung, d.h. der Steuerung der Anlage vorgenommen werden. Es kann jedoch das Problem entstehen, dass die Anzahl der notwendigen Bildschirme, die bis zu zwölf Monitore betragen kann, das Auffassungsvermögen der Bedienperson übersteigen und somit die Anzeigen reduziert werden müssen. Daher ist es vorteilhaft, dass abhängig vom Anlagen- und Betriebszustand situativ die Anzeigen auf den Monitoren auf entsprechende Abschnitte der Anlage umgeschaltet werden. Die Umschaltung kann automatisch gemäß den oben beschriebenen Verfahren mithilfe eines Anwendungsprogrammes der Mensch-Maschine-Schnittstelle erfolgen. Der Anlagen- und Betriebszustand kann über Informationen aus der Anlagenautomatisierung, über Auswertungen der Kamerabilder z.B. unter Verwendung von künstlicher Intelligenz oder weitere Auswertungen durch ein Anwendungsprogramm des ersten Rechensystems erfolgen. Die weiteren Auswertungen können zusammen mit einem wissensbasierten, gegebenenfalls mitlernenden Entscheidungsalgorithmus, der die Monitore umschaltet, in der interaktiven Bedienerführungsanwendung 42 an das Assistentenprogramm 30 des ersten Rechensystems 3 angeschlossen sein. Das Assistentenprogramm 30 stellt einen digitalen Assistenten zur Überwachung und/oder zur Steuerung der Anlage dar.

Die Anlagenautomatisierung ist ausgebildet, um die Bilder des Kamerasystems für die Anlagenautomatisierung zu verwenden. Mithilfe der beschriebenen Verfahren kann die Anlagenautomatisierung Bilder der Anlage selbständig einholen, auswerten und abhängig von der Auswertung eine Änderung der Steuerwerte für Funktionen der Anlage durchführen, um ein gewünschte Funktionsweise zu erreichen oder beizubehalten. Durch die direkte Anbindung wird eine geringe Latenzzeit zwischen der Übermittlung der Bilder und der Reaktion der Anlagenautomatisierung erreicht. Die Anzeigesysteme der Mensch-Maschine-Schnittstelle, die Monitore, Videowände usw. umfassen können, können auch direkt an das Assistentenprogramm 30, d.h. den Kern des ersten Rechensystems 3 angeschlossen sein.

Eine Bedienperson kann über die interaktive Bedienerführung der Mensch-Maschine-Schnittstelle Szenarien anlegen und parametrieren. Dabei kann festgelegt werden, welche Bilder welcher Kameras auf welchen Monitoren und bei welchen Ereignissen dargestellt werden. Zudem kann festgelegt werden, aufgrund welcher Ereignisse ein vorgegebenes Szenario eintritt. Mithilfe des Szenarien kann festgelegt werden, wann welches Kamerabild auf welchem Monitor des Anzeigesystems der Mensch-Maschine-Schnittstelle dargestellt wird. Weiterhin kann die Steuerung der Szenarien über eine Spracheingabe an der Mensch-Maschine-Schnittstelle festgelegt werden. Dabei können feste Kommandos hinterlegt werden, um eine Spracherkennung zu ermöglichen. Zudem kann die Steuerung einzelner Monitore über den digitalen Assistenten, d.h. das Assistentenprogramm 30 festgelegt werden. Dabei können feste Kommandos hinterlegt werden, um gezielt einzelne Monitore auf einem Bildschirm darzustellen, jenseits definierter Szenarien. Beispielsweise können bei plötzlichen Störungen die Anzeigemonitore mit festgelegten Informationen belegt werden. Dabei kann festgelegt werden, dass abhängig von der Art der Störung festgelegte Bilder von festgelegten Kameras oder Anlagenzuständen auf den Monitoren des Anzeigesystems dargestellt werden.

FIG 6 zeigt eine weitere Ausführungsform für eine Programmstruktur einer Anlage 2. Bei dieser Ausführungsform ist das Assistentenprogramm 30 des ersten Rechensystems 3 mit einer Anlagenautomatisierung 39, einem Zustandsüberwachungsprogramm 33 und weiteren Anwendungsprogrammen 34 verbunden. Zudem ist eine Mensch-Maschine-Schnittstelle 17 an das Assistentenprogramm 30 des ersten Rechensystems 3 angeschlossen. Weiterhin ist ein Diagnoseanwendungsprogramm 45 an das Assistentenprogramm 30 des ersten Rechensystems 3 angeschlossen.

Ein Zustand von Anlagen für eine Metallerzeugung und Metallverarbeitung kann komplex und schwierig erfassbar sein. Für viele Anwendungen ist es aber zielführend, ein möglichst geschlossenes Bild über den Zustand der Anlage zu bekommen. Beispielsweise kann eine Fehleranalyse, eine Qualitätsanalyse, eine Wartungsplanung und/oder eine Weiterentwicklung zum Erreichen einer Anlagenverbesserung gewünscht werden. Da das Assistentenprogramm die verschiedenen Rechensysteme und Sensorvorrichtungen der Teilanlagen der Anlage miteinander verbindet, kann ein ganzheitlicher Zustand der Anlage zu einem gewünschten Zeitpunkt/Zeitraum aggregiert werden. Zum Beispiel kann der Anlagenzustand aus einem Zustand des Zustandsüberwachungssystems (Condition Monitoring System), einem Zustand der Anlagenautomatisierung, aus einem Zustand der Produktionsqualität aus einem Qualitätsmanagement-System, einem Wartungszustand aus einem Wartungssystem, und/oder aus einem Produktionsplan eines Produktionsmanagement-Systems usw. ermittelt werden.

Weiterhin kann automatisch aus den oben genannten und aggregierten Daten mithilfe von technologischem Wissen zusätzliche Informationen abgebildet werden. Daraus können auch Handlungsempfehlungen wie Steuereingriffe in die Steuerung der Anlage oder andere komplexere Schlussfolgerungen gegeben werden. Mit den vorgeschlagenen Weiterbildungen wird eine schnellere Zustandsanalyse erreicht. Es wird eine bessere Einsicht in die Funktionsfähigkeit der Anlage bzw. die Produktion gegeben. Weiterhin bieten sich dadurch Möglichkeiten, präziser die weitere Steuerung und Analyse der Anlage durchzuführen. Durch das im Assistentenprogramm technologisch abgebildete Wissen kann konstant eine Zustandsanalyse durchgeführt werden, die unabhängig von einer Bedienperson ist. Damit sind auch Vergleiche von wiederholten Zustandsanalysen einfacher möglich. Weiterhin kann das Diagnoseprogramm bereits während der Inbetriebnahme der Anlage verwendet werden, um noch nicht vollständig in Betrieb genommene Anlagenteile zu identifizieren bzw. deren korrekte Inbetriebnahme nachzuprüfen und zu dokumentieren.

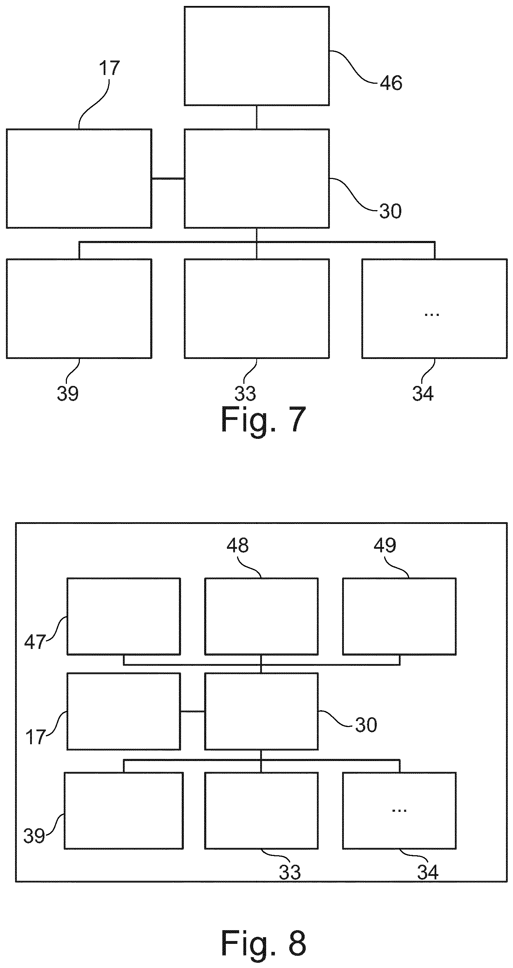

FIG 7 zeigt eine weitere Ausführungsform für eine Programmstruktur der Anlage 2, die im Wesentlichen gemäß der FIG 6 ausgebildet ist. Jedoch ist anstelle oder zusätzlich zum

Diagnoseprogramm 45 ein Dokumentenprogramm 46 mit dem Assistentenprogramm 30 des ersten Rechensystems 3 verbunden.

Anlagen für eine Metallerzeugung bzw. Metallverarbeitung bestehen in der Regel aus vielen verschiedenen Einzelaggregaten, teils auch von verschiedenen Herstellern. Zu den jeweiligen Einzelaggregaten gibt es jeweils eine Dokumentation, die in einem Datenspeicher abgelegt ist. Weiterhin ist es sinnvoll, je nach Betriebszustand aus verschiedenen Systemen wie der Anlagenautomatisierung, der Zustandsüberwachung, dem Wartungssystem, dem Ersatzteilkatalog usw. auf die Dokumentationen der einzelnen Aggregate der Anlage zugreifen zu können. Vorteilhafterweise sollte aber nur an einer Stelle, d.h. in einem Datenspeicher die Dokumentation für die gesamte Anlage vorhanden sein, um unterschiedliche Versionen oder einen hohen Wartungsaufwand zu vermeiden. Sind die verschiedenen Systeme wie Anlagenautomatisierung, Zustandsüberwachung, Wartungssystem, Ersatzteilkatalog usw. an das Assistentenprogramm angeschlossen und an diesen wiederum eine Dokumentenverwaltung mit Suchfunktion angeschlossen, kann diese Funktion einfach bereitgestellt werden. So kann neben einem automatischen Zugriff durch eines der oben genannten Systeme auch ein Zugriff durch eine Bedienperson über die Mensch-Maschine-Schnittstelle folgen. Somit kann das System um eine zielgerichtete Dokumentation erweitert werden. Eine Suchfunktion für die Dokumente kann insbesondere auf eine künstliche Intelligenz zurückgreifen, die von dem ersten Rechensystem 3 bereitgestellt wird.

FIG 8 zeigt eine weitere Programmstruktur für die Anlage 3, die im Wesentlichen der Ausführungsform der FIG 6 entspricht, wobei jedoch nicht nur ein Anwendungsprogramm, sondern mehrere Anwendungsprogramme mit dem Assistentenprogramm 30 des ersten Rechensystems 3 verbunden sind. In diesem Fall sind ein erster Wartungs-/Betriebsassistent 47, ein zweiter Wartungs-/Betriebsassistent 48 und ein dritter Wartungs-/Betriebsassistent 49 an das Assistentenprogramm 30 des ersten Rechensystems 3 angeschlossen.

An das Assistentenprogramm können Wartungs- und Betriebsassistenten angeschlossen werden, die über die Mensch-Maschine-Schnittstelle für eine Bedienperson Informationen oder Anweisungen geben kann und durchgeführte Schritte dokumentieren kann. Weiterhin können die Wartungs-/Betriebsassistentenprogramme auch direkt in den Anlagebetrieb eingreifen. Die Wartungs-/Betriebsprogramme können auf hinterlegtem Wissen basieren bzw. hinterlegte Informationen und Regeln sowie selbstständig erlerntes Wissen, z.B. durch eine künstliche Intelligenz berücksichtigen. Dabei können auch Auswertungen mithilfe von Datenanalyse-Methoden (Deep Learning, Machine Learning, Support Vector Machines usw.) durchgeführt werden. Zudem kann für jeden Anwendungsfall ein besonderes Wartungs-/Betriebsassistentenprogramm verwendet werden.

Das verwendete Assistentenprogramm bietet den Vorteil, dass eine Einbindung von weiteren Anwendungsprogrammen auf einfache Weise möglich ist. Somit kann die Anlage mit weiteren Einzelaggregaten erweitert oder einzelne Aggregate aus der Anlage genommen werden und die entsprechenden dazugehörigen Dokumentationen bzw. Programme unabhängig von der Funktionalität des jeweiligen Einzelaggregates bzw. unabhängig von der Funktionalität des jeweiligen Anwendungsprogrammes flexibel verändert werden.

Das vorgeschlagene System mit einem modularen Aufbau aus einem Assistentenprogramm und Teilanlagen, sogenannten Anwendungsprogrammen, die intern im ersten Rechensystem oder extern auf anderen Rechensystemen ablaufen können, bietet eine verbesserte Flexibilität. Die Kommunikation zwischen Teilanlagen und dem Assistentenprogramm erfolgt vorzugsweise über standardisierte Nachrichten und standardisierte Kommunikationsprotokolle. Dazu kann beispielsweise ein Message Broker verwendet werden, der dazu dient, eine sichere Nachrichtenübertragung zu gewährleisten. Darunter fällt das Puffern von Nachrichten und dass die Nachrichten in einer Reihe gespeichert werden, sodass geprüft wird, ob Nachrichten tatsächlich zugestellt wurden.

Weiterhin kann es vorteilhaft sein, dass ein Verbindungsaufbau nach einem Verbindungsabbruch automatisch wieder hergestellt wird. Ein grundsätzlicher Aufbau kann gemäß einem Apache Artemis Programm erfolgen. Mithilfe des vorgeschlagenen Systems können definierte und freie Suchabfragen von Informationen und/oder Wissen erfolgen, ohne konkret zu wissen, welches andere Teilanlagen welche Information in welcher Art und Weise liefern kann und liefern wird. Die freie Suchanfrage (z.B. Sprach-, Text-, Bild- oder Videoeingabe) kann mithilfe eines NLU-Programms (Natural Language Unit) in eine definierte Suchabfrage umgewandelt werden. Die NLU kann dabei eine künstliche Intelligenz zur inkrementellen Verbesserung der Umwandlung verwenden. Im Stand der Technik sind NLUs vorhanden, die bereits teilweise die Möglichkeit der Verwendung verschiedener Sprachen ermöglichen.

Das beschriebene System kann in einem verteilten Computernetzwerk, gegebenenfalls auch über das Internet realisiert sein. Information, Wissen und deren Verknüpfung können in den Anwendungsprogrammen hinterlegt sein.

Mithilfe des beschriebenen Systems kann eine Kommunikation der Teilanlagen zum Informations- und/oder Wissensaustausch ermöglicht werden. Dabei können sowohl definierte als auch freie Suchabfragen von Informationen und/oder Wissen durchgeführt werden, ohne konkret zu wissen, welches andere Teilanlagen welche Informationen welcher Art liefern kann und liefern wird. Zur freien Suchanfrage stehen der Bedienperson unterschiedliche Sprachen zur Verfügung, die auch erweiterbar sind. Damit sind Informationen und Wissen aus unterschiedlichen Sprachen extrahierbar.

Des Weiteren ermöglicht der modulare Aufbau des Systems ein Funktionieren des Assistentenprogramms, auch wenn a priori unklar ist, welche Teilanlage der Anlage zu einem Zeitpunkt vorhanden ist. Explizit können Teilanlagen ausgetauscht, erweitert, modifiziert, hinzugefügt oder entfernt werden. Insbesondere können sich das Leistungsspektrum der Teilanlagen und damit die gelieferten Informationen verändern. Dadurch wird ermöglicht, dass durch ein verändertes Leistungsspektrum eines der Teilanlagen die generelle Funktionsweise anderer Teilanlagen ohne Anpassungen in der Kommunikation und Funktion nicht beeinträchtigt wird. Dabei kann allerdings durch eine Veränderung der Informationen einer Teilanlage das Funktionsspektrum anderer Teilanlagen erweitert oder reduziert werden. Des Weiteren kann in den einzelnen Anwendungsprogrammen durch die Bedienperson erweiterbares Wissen in Teilanlagen abgebildet und zur Verfügung gestellt werden. Weiterhin ist das Wissen auf die Information anwendbar, um Mehrwert für die Verwendung des digitalen Assistenten zu generieren. Zudem wird die Kommunikation zwischen Teilanlagen untereinander und zwischen Teilanlagen und Bedienpersonen mithilfe von frei formulierten Anfragen nach Informationen in der Kommunikation abgebildet (siehe Einbindung der NLU im Assistentenprogramm), was eine einfache Bedienung ohne Schnittstellen-Know-How ermöglicht.

### Bezugszeichenliste

- 1: Vorrichtung
- 2: Anlage
- 3: erstes Rechensystem
- 4: zweites Rechensystem
- 5: drittes Rechensystem
- 6: viertes Rechensystem
- 7: erster Datenspeicher
- 8: zweiter Datenspeicher
- 9: dritter Datenspeicher
- 10: vierter Datenspeicher
- 11: erste Sensorvorrichtung
- 12: zweite Sensorvorrichtung
- 13: dritte Sensorvorrichtung
- 14: erster Aktor
- 15: zweiter Aktor
- 16: dritter Aktor
- 17: Mensch-Maschine-Schnittstelle
- 18: fünftes Rechensystem
- 21: erste Teilanlage
- 22: zweite Teilanlage
- 23: dritte Teilanlage
- 24: erste Schnittstelle
- 25: zweite Schnittstelle
- 26: Bedienperson
- 30: Assistentenprogramm
- 31: erstes Anwendungsprogramm
- 32: zweites Anwendungsprogramm
- 33: drittes Anwendungsprogramm
- 34: viertes Anwendungsprogramm
- 35: fünftes Anwendungsprogramm
- 36: sechstes Anwendungsprogramm
- 37: siebtes Anwendungsprogramm
- 38: achtes Anwendungsprogramm
- 39: Anlagenautomatisierung
- 40: Erkennungsprogramm
- 41: weitere Schnittstelle
- 42: interaktive Bedienerschnittstelle
- 43: Anzeigesystem
- 44: Kamera
- 45: Diagnoseprogramm
- 46: Dokumentenprogramm
- 47: erstes Wartungs-/Betriebsprogramm
- 48: zweites Wartungs-/Betriebsprogramm
- 49: drittes Wartungs-/Betriebsprogramm
- 50: Eingabefeld
- 51: Anfrage
- 52: Antwort
- 53: zweite Anfrage
- 54: zweite Antwort
- 55: dritte Anfrage
- 56: dritte Antwort
- 57: vierte Antwort
- 58: Anzeigefenster

## Patentansprüche

1. Vorrichtung (1) zur Steuerung und/oder zur Überwachung einer technischen Anlage (2) zur Metallerzeugung und/oder Metallverarbeitung, mit einem Rechensystem (3) mit wenigstens einer Schnittstelle (24, 25) zum Verbinden mit wenigstens einem weiteren Rechensystem (4, 5, 6, 18) der Anlage und/oder wenigstens einer Sensorvorrichtung (11, 12, 13) der Anlage (2) und/oder mit wenigstens einer Mensch-Maschine-Schnittstelle (17) und/oder einem Anwendungsprogramm (31, 32, 33, 34, 35, 36, 37, 38), wobei das Rechensystem (3) ausgebildet ist, um über die Schnittstelle (24, 25) eine Anfrage über eine Information über die Anlage (2) von wenigstens einem anfragenden weiteren Rechensystem (4, 5, 6, 18) und/oder von einer anfragenden Sensorvorrichtung (11, 12, 13) der Anlage und/oder von einer anfragenden Mensch-Maschine-Schnittstelle (17) und/oder von einem Anwendungsprogramm (31, 32, 33, 34, 35, 36, 37, 38) zu erhalten, wobei das Rechensystem (3) auf ein Datenmodell über das weitere Rechensystem (4, 5, 6, 18) und/oder die Sensorvorrichtung (11, 12, 13) und/oder die Mensch-Maschine-Schnittstelle (17) und/oder ein weiteres Anwendungsprogramm (31, 32, 33, 34, 35, 36, 37, 38) zugreifen kann, wobei das Datenmodell einen Hinweis darauf gibt, auf welche Informationen das weitere Rechensystem (4, 5, 6, 18) und/oder die Sensorvorrichtung (11, 12, 13) und/oder die Mensch-Maschine-Schnittstelle (17) und/oder das weitere Anwendungsprogramm (31, 32, 33, 34, 35, 36, 37, 38) zugreifen können, wobei das Rechensystem (3) ausgebildet ist, um anhand des Datenmodells das weitere Rechensystem (4, 5, 6, 18) und/oder die Sensorvorrichtung (11, 12, 13) und/oder die Mensch-Maschine-Schnittstelle (17) und/oder das weitere Anwendungsprogramm (31, 32, 33, 34, 35, 36, 37, 38) zu ermitteln, die die gesuchte Information liefern können, wobei das Rechensystem (3) ausgebildet ist, um über die Schnittstelle (24, 25) die angefragte Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) und/oder von dem wenigstens einen weiteren Anwendungsprogramm (31, 32, 33, 34, 35, 36, 37, 38) einzuholen, wobei das Rechensystem (3) ausgebildet ist, um die eingeholte Information über die Schnittstelle (24, 25) an das anfragende weitere Rechensystem (4, 5, 6, 18) und/oder an die anfragende Sensorvorrichtung (11, 12, 13) der Anlage und/oder an die anfragende Mensch-Maschine-Schnittstelle (17) und/oder an das anfragende Anwendungsprogramm (31, 32, 33, 34, 35, 36, 37, 38) auszugeben,
wobei das Datenmodell für die weiteren Rechensysteme (4, 5, 6, 18) und/oder Sensorvorrichtungen (11, 12, 13) und/oder Mensch-Maschine-Schnittstellen (17) und/oder die weiteren Anwendungsprogramme (31, 32, 33, 34, 35, 36, 37, 38) festgelegte Beispiele für Suchanfragen aufweist, mit denen nach Informationen in den weiteren Rechensystemen (4, 5, 6, 18) und/oder den Sensorvorrichtungen (11, 12, 13) und/oder den Mensch-Maschine-Schnittstellen (17) gesucht werden kann,
wobei das Rechensystem (3) ausgebildet ist, um durch einen Vergleich der festgelegten Beispiele mit der Anfrage zu ermitteln, welches weitere Rechensystem (4, 5, 6, 18) und/oder welche Sensorvorrichtung (11, 12, 13) und/oder welche Mensch-Maschine-Schnittstelle (17) und/oder welches weitere Anwendungsprogramm (31, 32, 33, 34, 35, 36, 37, 38) die gesuchte Information liefern kann,
wobei das Rechensystem (3) ausgebildet ist, um anhand des Datenmodells festzustellen, mit welcher Wahrscheinlichkeit das weitere Rechensystem (4, 5, 6, 18) und/oder die Sensorvorrichtung (11, 12, 13) und/oder die Mensch-Maschine-Schnittstelle (17) und/oder das weitere Anwendungsprogramm (31, 32, 33, 34, 35, 36, 37, 38) die gesuchte Information liefern kann;
wobei das Rechensystem die Anfrage an das ermittelte weitere Rechensystem und/oder an die ermittelte Sensorvorrichtung und/oder an die ermittelte Mensch-Maschine-Schnittstelle und/oder an das ermittelte Anwendungsprogramm weitergibt, das die höchste Wahrscheinlichkeit aufweist;
wobei das Datenmodell als trainiertes neuronales Netz ausgebildet ist, wobei das neuronale Netz ausgebildet ist, um das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können, wobei das neuronale Netz mithilfe eines überwachten Lernverfahrens mit vorgegebenen Beispielen trainiert worden ist, um anhand einer Anfrage das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können, wobei die Beispiele ähnlich oder identisch zu den Anfragen ausgebildet sind.

2. Vorrichtung nach Anspruch 1, wobei das Rechensystem ausgebildet ist, um über eine Natural Language Unit, NLU, Programm aus einer vorliegenden Anfrage eine durch die Anfrage gesuchte Information zu ermitteln.

3. Vorrichtung nach einem der vorhergehenden Ansprüche, wobei das Rechensystem (3) ausgebildet ist, um als Antwort auf eine Anfrage nach einer Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) und/oder wenigstens einem weiteren Anwendungsprogramm (31, 32, 33, 34, 35, 36, 37, 38) eine weitere Anfrage nach einer weiteren Information über die Anlage zu erhalten, wobei das Rechensystem (3) ausgebildet ist, um anhand der weiteren Anfrage mithilfe des Datenmodells zu ermitteln, welches weitere Rechensystem (4, 5, 6, 18) und/oder welche Sensorvorrichtung (11, 12, 13) und/oder welche Mensch-Maschine-Schnittstelle (17) und/oder welches weitere Anwendungsprogramm (31, 32, 33, 34, 35, 36, 37, 38) die weitere Anfrage beantworten kann, wobei das Rechensystem (3) ausgebildet ist, um über die Schnittstelle (24, 25) die angefragte weitere Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) und/oder von dem wenigstens einen weiteren Anwendungsprogramm (31, 32, 33, 34, 35, 36, 37, 38) einzuholen, wobei das Rechensystem (3) ausgebildet ist, um die eingeholte weitere Information über die Schnittstelle (24, 25) an das anfragende weitere Rechensystem (4, 5, 6, 18) und/oder an die anfragende Sensorvorrichtung (11, 12, 13) der Anlage und/oder an die anfragende Mensch-Maschine-Schnittstelle (17) und/oder an das anfragende Anwendungsprogramm (31, 32, 33, 34, 35, 36, 37, 38) auszugeben.

4. Vorrichtung nach einem der vorhergehenden Ansprüche, wobei das Rechensystem (3) ausgebildet ist, um abhängig von wenigstens einem vorgegebenen Betriebszustand der Anlage (2) und/oder einem vorgegebenen Steuerwert für die Anlage (2) eine festgelegte Information über die Schnittstelle (24) von wenigstens einem weiteren Rechensystem (4, 5, 6, 18) und/oder einer Sensorvorrichtung (11, 12 ,13) und/oder einer Mensch-Maschine-Schnittstelle und/oder das weitere Anwendungsprogramm (31, 32, 33, 34, 35, 36, 37, 38) einzuholen, wobei das Rechensystem (3) ausgebildet ist, um die selbständig eingeholte Information über die Schnittstelle (24) an ein weiteres Rechensystem (4, 5, 6, 18) und/oder eine Sensorvorrichtung (11, 12, 13) und/oder an die Mensch-Maschine-Schnittstelle (17) und/oder an das weitere Anwendungsprogramm (31, 32, 33, 34, 35, 36, 37, 38) auszugeben.

5. Vorrichtung nach einem der vorhergehenden Ansprüche, wobei über die Schnittstelle (24) weitere Rechensysteme (4, 5, 6, 18) für Teilanlagen (21, 22, 23) der Anlage (2) verbindbar sind, wobei das Rechensystem (3) ausgebildet ist, um über die Schnittstelle (24) auf Dokumentationen von Teilanlagen (21, 22, 23) der Anlage (2) zuzugreifen, Informationen in den Dokumentationen zu suchen und über die Schnittstelle an ein weiteres Rechensystem (4, 5, 6, 18) und/oder an eine Sensorvorrichtung (11, 12, 13) und/oder an eine Mensch-Maschine-Schnittstelle (17) und/oder ein Anwendungsprogramm (31, 32, 33, 34, 35, 36, 37, 38) auszugeben,
und/oder wobei das Rechensystem (3) ausgebildet ist, um mithilfe eines Wartungs-/Betriebsprogramms wenigstens eine Information über die Anlage (2) zu ermitteln, Anweisungen über die Schnittstelle auszugeben, durchgeführte Schritte zu dokumentieren und/oder in eine Steuerung der Anlage (2) einzugreifen.

6. Vorrichtung nach einem der vorhergehenden Ansprüche, wobei das Datenmodell ein erstes Datenmodell aufweist, das für mehrere weitere Rechensysteme (4, 5, 6, 18) und/oder Sensorvorrichtungen (11, 12, 13) und/oder Mensch-Maschine-Schnittstellen (17) und/oder weitere Anwendungsprogramme (31, 32, 33, 34, 35, 36, 37, 38) vorgesehen ist, wobei die Recheneinheit (3) ausgebildet ist, um anhand der Anfrage und mithilfe des ersten Datenmodells das wenigstens eine weitere Rechensystem (4, 5, 6, 18) und/oder die wenigstens eine Sensorvorrichtung (11, 12, 13) und/oder die wenigstens eine Mensch-Maschine-Schnittstelle (17) und/oder das wenigstens eine weitere Anwendungsprogramm (31, 32, 33, 34, 35, 36, 37, 38) zu ermitteln, das die mit der Anfrage gesuchte Information liefern kann, wobei das Datenmodell wenigstens ein zweites Datenmodell für ein weiteres Rechensystem (4, 5, 6, 18) oder eine Sensorvorrichtung (11, 12, 13) oder eine Mensch-Maschine-Schnittstelle (17) oder ein weiteres Anwendungsprogramm (31, 32, 33, 34, 35, 36, 37, 38) aufweist, wobei die Recheneinheit (3) ausgebildet ist, um anhand des zweiten Datenmodells zu ermitteln, mit welchem Anwendungsprogramm (31, 32, 33, 34, 35, 36, 37, 38) des ermittelten weiteren Rechensystems (4, 5, 6, 18) und/oder der ermittelten Sensorvorrichtung (11, 12, 13) und/oder der ermittelten Mensch-Maschine-Schnittstelle (17) und/oder mit welcher Funktion des ermittelten weiteren Anwendungsprogramms (31, 32, 33, 34, 35, 36, 37, 38) die mit der Anfrage gesuchte Information ermittelt werden kann, wobei die Recheneinheit (3) ausgebildet ist, um nach Ermittlung des weiteren Anwendungsprogramms (31, 32, 33, 34, 35, 36, 37, 38) oder der Funktion des weiteren Anwendungsprogramms (31, 32, 33, 34, 35, 36, 37, 38), das/die die gesuchte Information ermitteln kann, die Anfrage an die ermittelte Funktion oder das ermittelte Anwendungsprogramm (31, 32, 33, 34, 35, 36, 37, 38) zu übergeben, und anschließend die Information von der ermittelten Funktion oder von dem ermittelten Anwendungsprogramm (31, 32, 33, 34, 35, 36, 37, 38) zu erhalten.

7. Verfahren zur Steuerung und/oder zur Überwachung einer technischen Anlage (2) zur Metallerzeugung und/oder Metallverarbeitung, mit einem Rechensystem (3) mit wenigstens einer Schnittstelle (24, 25) zum Verbinden mit wenigstens einem weiteren Rechensystem (4, 5, 6, 18) der Anlage und/oder wenigstens einer Sensorvorrichtung (11, 12, 13) der Anlage (2) und/oder mit wenigstens einer Mensch-Maschine-Schnittstelle (17) und/oder einem Anwendungsprogramm (31, 32, 33, 34, 35, 36, 37, 38), wobei das Rechensystem (3) über die Schnittstelle (24, 25) eine Anfrage über eine Information über die Anlage (2) von wenigstens einem anfragenden weiteren Rechensystem (4, 5, 6, 18) und/oder von einer anfragenden Sensorvorrichtung (11, 12, 13) der Anlage und/oder von einer anfragenden Mensch-Maschine-Schnittstelle (17) und/oder von einem Anwendungsprogramm (31, 32, 33, 34, 35, 36, 37, 38) erhält, wobei das Rechensystem (3) auf ein Datenmodell über das weitere Rechensystem (4, 5, 6, 18) und/oder die Sensorvorrichtung (11, 12, 13) und/oder die Mensch-Maschine-Schnittstelle (17) und/oder ein weiteres Anwendungsprogramm (31, 32, 33, 34, 35, 36, 37, 38) zugreift, wobei das Datenmodell einen Hinweis darauf gibt, auf welche Informationen das weitere Rechensystem (4, 5, 6, 18) und/oder die Sensorvorrichtung (11, 12, 13) und/oder die Mensch-Maschine-Schnittstelle (17) und/oder das weitere Anwendungsprogramm (31, 32, 33, 34, 35, 36, 37, 38) zugreifen können, wobei das Rechensystem (3) anhand des Datenmodells das weitere Rechensystem (4, 5, 6, 18) und/oder die Sensorvorrichtung (11, 12, 13) und/oder die Mensch-Maschine-Schnittstelle (17) und/oder das weitere Anwendungsprogramm (31, 32, 33, 34, 35, 36, 37, 38) ermittelt, die die gesuchte Information liefern können, wobei das Rechensystem (3) über die Schnittstelle (24, 25) die angefragte Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) und/oder von dem wenigstens einen weiteren Anwendungsprogramm (31, 32, 33, 34, 35, 36, 37, 38) einholt, wobei das Rechensystem (3) die eingeholte Information über die Schnittstelle (24, 25) an das anfragende weitere Rechensystem (4, 5, 6, 18) und/oder an die anfragende Sensorvorrichtung (11, 12, 13) der Anlage und/oder an die anfragende Mensch-Maschine-Schnittstelle (17) und/oder an das anfragende Anwendungsprogramm (31, 32, 33, 34, 35, 36, 37, 38) ausgibt,
wobei das Datenmodell für die weiteren Rechensysteme (4, 5, 6, 18) und/oder Sensorvorrichtungen (11, 12, 13) und/oder Mensch-Maschine-Schnittstellen (17) und/oder die weiteren Anwendungsprogramme (31, 32, 33, 34, 35, 36, 37, 38) festgelegte Beispiele für Suchanfragen aufweist, mit denen nach Informationen in den weiteren Rechensystemen (4, 5, 6, 18) und/oder den Sensorvorrichtungen (11, 12, 13) und/oder den Mensch-Maschine-Schnittstellen (17) gesucht werden kann, wobei das Rechensystem (3) durch einen Vergleich der festgelegten Beispiele mit der Anfrage ermittelt, welches weitere Rechensystem (4, 5, 6, 18) und/oder welche Sensorvorrichtung (11, 12, 13) und/oder welche Mensch-Maschine-Schnittstelle (17) und/oder welches weitere Anwendungsprogramm (31, 32, 33, 34, 35, 36, 37, 38) die gesuchte Information liefern kann, wobei das Rechensystem (3) anhand des Datenmodells feststellt, mit welcher Wahrscheinlichkeit das weitere Rechensystem (4, 5, 6, 18) und/oder die Sensorvorrichtung (11, 12, 13) und/oder die Mensch-Maschine-Schnittstelle (17) und/oder das weitere Anwendungsprogramm (31, 32, 33, 34, 35, 36, 37, 38) die gesuchte Information liefern kann;
wobei das Rechensystem die Anfrage an das ermittelte weitere Rechensystem und/oder an die ermittelte Sensorvorrichtung und/oder an die ermittelte Mensch-Maschine-Schnittstelle und/oder an das ermittelte Anwendungsprogramm weitergibt, das die höchste Wahrscheinlichkeit aufweist;
wobei das Datenmodell als trainiertes neuronales Netz ausgebildet ist, wobei das neuronale Netz ausgebildet ist, um das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können, wobei das neuronale Netz mithilfe eines überwachten Lernverfahrens mit vorgegebenen Beispielen trainiert worden ist, um anhand einer Anfrage das weitere Rechensystem und/oder die Sensorvorrichtung und/oder die Mensch-Maschine-Schnittstelle und/oder das Anwendungsprogramm zu ermitteln, die die mit der Anfrage gesuchte Information liefern können, wobei die Beispiele ähnlich oder identisch zu den Anfragen ausgebildet sind.

8. Verfahren nach Anspruch 7, wobei das Rechensystem über ein Natural Language Unit, NLU, Programm aus einer vorliegenden Anfrage eine durch die Anfrage gesuchte Information ermittelt.

9. Verfahren nach einem der Ansprüche 7 oder 8, wobei das Rechensystem als Antwort auf eine Anfrage nach einer Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) und/oder wenigstens einem weiteren Anwendungsprogramm (31, 32, 33, 34, 35, 36, 37, 38) eine weitere Anfrage nach einer weiteren Information über die Anlage erhält, wobei das Rechensystem anhand der weiteren Anfrage mithilfe des Datenmodells ermittelt, welches weitere Rechensystem (4, 5, 6, 18) und/oder welche Sensorvorrichtung (11, 12, 13) und/oder welche Mensch-Maschine-Schnittstelle (17) und/oder welches weitere Anwendungsprogramm (31, 32, 33, 34, 35, 36, 37, 38) die weitere Anfrage beantworten kann, wobei das Rechensystem über die Schnittstelle (24, 25) die angefragte weitere Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) und/oder von dem wenigstens einen weiteren Anwendungsprogramm (31, 32, 33, 34, 35, 36, 37, 38) einholt, wobei das Rechensystem die eingeholte weitere Information über die Schnittstelle (24, 25) an das anfragende weitere Rechensystem (4, 5, 6, 18) und/oder an die anfragende Sensorvorrichtung (11, 12, 13) der Anlage und/oder an die anfragende Mensch-Maschine-Schnittstelle (17) und/oder an das anfragende Anwendungsprogramm (31, 32, 33, 34, 35, 36, 37, 38) ausgibt.

10. Verfahren nach einem der Ansprüche 7 bis 9, wobei das Rechensystem abhängig von wenigstens einem vorgegebenen Betriebszustand der Anlage (2) und/oder einem vorgegebenen Steuerwert für die Anlage (2) eine festgelegte Information über die Schnittstelle (24) von wenigstens einem weiteren Rechensystem (4, 5, 6, 18) und/oder einer Sensorvorrichtung (11, 12 ,13) und/oder einer Mensch-Maschine-Schnittstelle und/oder das weitere Anwendungsprogramm (31, 32, 33, 34, 35, 36, 37, 38) einholt, wobei das Rechensystem die selbständig eingeholte Information über die Schnittstelle (24) an ein weiteres Rechensystem (4, 5, 6, 18) und/oder eine Sensorvorrichtung (11, 12, 13) und/oder an die Mensch-Maschine-Schnittstelle (17) und/oder an das weitere Anwendungsprogramm (31, 32, 33, 34, 35, 36, 37, 38) ausgibt.

11. Verfahren nach einem der Ansprüche 7 bis 10, wobei über die Schnittstelle (24) weitere Rechensysteme (4, 5, 6, 18) für Teilanlagen (21, 22, 23) der Anlage (2) verbindbar sind, wobei das Rechensystem über die Schnittstelle (24) auf Dokumentationen von Teilanlagen (21, 22, 23) der Anlage (2) zugreift und Informationen in den Dokumentationen sucht und über die Schnittstelle an ein weiteres Rechensystem (4, 5, 6, 18) und/oder an eine Sensorvorrichtung (11, 12, 13) und/oder an eine Mensch-Maschine-Schnittstelle (17) und/oder ein Anwendungsprogramm (31, 32, 33, 34, 35, 36, 37, 38) ausgibt, wobei insbesondere das Rechensystem mithilfe eines Wartungs-/Betriebsprogramms wenigstens eine Information über die Anlage (2) ermittelt, Anweisungen über die Schnittstelle ausgibt, durchgeführte Schritte dokumentiert und/oder in eine Steuerung der Anlage (2) eingreift.

## Claims

1. Apparatus (1) for controlling and/or monitoring a technical installation (2) for producing and/or processing metal, having a computing system (3) with at least one interface (24, 25) for connection to at least one further computing system (4, 5, 6, 18) of the installation and/or to at least one sensor apparatus (11, 12, 13) of the installation (2) and/or to at least one man-machine interface (17) and/or to an application program (31, 32, 33, 34, 35, 36, 37, 38), wherein the computing system (3) is designed to receive a request for an item of information relating to the installation (2) from at least one requesting further computing system (4, 5, 6, 18) and/or from a requesting sensor apparatus (11, 12, 13) of the installation and/or from a requesting man-machine interface (17) and/or from an application program (31, 32, 33, 34, 35, 36, 37, 38) via the interface (24, 25), wherein the computing system (3) can access a data model via the further computing system (4, 5, 6, 18) and/or the sensor apparatus (11, 12, 13) and/or the man-machine interface (17) and/or a further application program (31, 32, 33, 34, 35, 36, 37, 38), wherein the data model provides an indication of what information can be accessed by the further computing system (4, 5, 6, 18) and/or the sensor apparatus (11, 12, 13) and/or the man-machine interface (17) and/or the further application program (31, 32, 33, 34, 35, 36, 37, 38), wherein the computing system (3) is designed to determine, on the basis of the data model, the further computing system (4, 5, 6, 18) and/or the sensor apparatus (11, 12, 13) and/or the man-machine interface (17) and/or the further application program (31, 32, 33, 34, 35, 36, 37, 38) which can provide the information sought, wherein the computing system (3) is designed to obtain the requested information from the at least one determined further computing system (4, 5, 6, 18) and/or from the at least one determined sensor apparatus (11, 12, 13) and/or from the at least one determined man-machine interface (17) and/or from the at least one further application program (31, 32, 33, 34, 35, 36, 37, 38) via the interface (24, 25), wherein the computing system (3) is designed to output the obtained information to the requesting further computing system (4, 5, 6, 18) and/or to the requesting sensor apparatus (11, 12, 13) of the installation and/or to the requesting man-machine interface (17) and/or to the requesting application program (31, 32, 33, 34, 35, 36, 37, 38) via the interface (24, 25),
wherein the data model has, for the further computing systems (4, 5, 6, 18) and/or sensor apparatuses (11, 12, 13) and/or man-machine interfaces (17) and/or the further application programs (31, 32, 33, 34, 35, 36, 37, 38), stipulated examples of search requests which can be used to search for information in the further computing systems (4, 5, 6, 18) and/or the sensor apparatuses (11, 12, 13) and/or the man-machine interfaces (17), wherein the computing system (3) is designed to determine, by comparing the stipulated examples with the request, which further computing system (4, 5, 6, 18) and/or which sensor apparatus (11, 12, 13) and/or which man-machine interface (17) and/or which further application program (31, 32, 33, 34, 35, 36, 37, 38) can provide the information sought,
wherein the computing system (3) is designed to determine, on the basis of the data model, the probability of the further computing system (4, 5, 6, 18) and/or the sensor apparatus (11, 12, 13) and/or the man-machine interface (17) and/or the further application program (31, 32, 33, 34, 35, 36, 37, 38) being able to provide the information sought;
wherein the computing system forwards the request to the determined further computing system and/or to the determined sensor apparatus and/or to the determined man-machine interface and/or to the determined application program having the highest probability;
wherein the data model is embodied as a trained neural network, wherein the neural network is designed to determine the further computing system and/or the sensor apparatus and/or the man-machine interface and/or the application program which can provide the information sought with the request, wherein the neural network has been trained with predefined examples with the aid of a supervised learning method in order to determine, on the basis of a request, the further computing system and/or the sensor apparatus and/or the man-machine interface and/or the application program which can provide the information sought with the request, wherein the examples are similar or identical to the requests.

2. Apparatus according to Claim 1, wherein the computing system is designed to determine an item of information sought by the request from an available request using a Natural Language Unit, NLU, program.

3. Apparatus according to one of the preceding claims, wherein the computing system (3) is designed to receive, in response to a request for an item of information, a further request for a further item of information relating to the installation from the at least one determined further computing system (4, 5, 6, 18) and/or from the at least one determined sensor apparatus (11, 12, 13) and/or from the at least one determined man-machine interface (17) and/or at least one further application program (31, 32, 33, 34, 35, 36, 37, 38), wherein the computing system (3) is designed to determine, on the basis of the further request with the aid of the data model, which further computing system (4, 5, 6, 18) and/or which sensor apparatus (11, 12, 13) and/or which man-machine interface (17) and/or which further application program (31, 32, 33, 34, 35, 36, 37, 38) can respond to the further request, wherein the computing system (3) is designed to obtain the requested further information from the at least one determined further computing system (4, 5, 6, 18) and/or from the at least one determined sensor apparatus (11, 12, 13) and/or from the at least one determined man-machine interface (17) and/or from the at least one further application program (31, 32, 33, 34, 35, 36, 37, 38) via the interface (24, 25), wherein the computing system (3) is designed to output the further information obtained to the requesting further computing system (4, 5, 6, 18) and/or to the requesting sensor apparatus (11, 12, 13) of the installation and/or to the requesting man-machine interface (17) and/or to the requesting application program (31, 32, 33, 34, 35, 36, 37, 38) via the interface (24, 25).

4. Apparatus according to one of the preceding claims, wherein the computing system (3) is designed to obtain an item of stipulated information from at least one further computing system (4, 5, 6, 18) and/or a sensor apparatus (11, 12, 13) and/or a man-machine interface and/or the further application program (31, 32, 33, 34, 35, 36, 37, 38) via the interface (24) depending on at least one predefined operating state of the installation (2) and/or a predefined control value for the installation (2), wherein the computing system (3) is designed to output the independently obtained information to a further computing system (4, 5, 6, 18) and/or to a sensor apparatus (11, 12, 13) and/or to the man-machine interface (17) and/or to the further application program (31, 32, 33, 34, 35, 36, 37, 38) via the interface (24).

5. Apparatus according to one of the preceding claims, wherein further computing systems (4, 5, 6, 18) for installation sections (21, 22, 23) of the installation (2) can be connected via the interface (24), wherein the computing system (3) is designed to access documentation relating to installation sections (21, 22, 23) of the installation (2) via the interface (24), to search for information in the documentation and to output it to a further computing system (4, 5, 6, 18) and/or to a sensor apparatus (11, 12, 13) and/or to a man-machine interface (17) and/or to an application program (31, 32, 33, 34, 35, 36, 37, 38) via the interface,
and/or wherein the computing system (3) is designed to determine at least one item of information relating to the installation (2) with the aid of a maintenance/operating program, to output instructions via the interface, to document steps which have been carried out and/or to intervene in control of the installation (2).

6. Apparatus according to one of the preceding claims, wherein the data model has a first data model which is provided for a plurality of further computing systems (4, 5, 6, 18) and/or sensor apparatuses (11, 12, 13) and/or man-machine interfaces (17) and/or further application programs (31, 32, 33, 34, 35, 36, 37, 38), wherein the computing unit (3) is designed to determine, on the basis of the request and with the aid of the first data model, the at least one further computing system (4, 5, 6, 18) and/or the at least one sensor apparatus (11, 12, 13) and/or the at least one man-machine interface (17) and/or the at least one further application program (31, 32, 33, 34, 35, 36, 37, 38) which can provide the information sought with the request, wherein the data model has at least one second data model for a further computing system (4, 5, 6, 18) or a sensor apparatus (11, 12, 13) or a man-machine interface (17) or a further application program (31, 32, 33, 34, 35, 36, 37, 38), wherein the computing unit (3) is designed to determine, on the basis of the second data model, which application program (31, 32, 33, 34, 35, 36, 37, 38) of the determined further computing system (4, 5, 6, 18) and/or of the determined sensor apparatus (11, 12, 13) and/or of the determined man-machine interface (17) and/or which function of the determined further application program (31, 32, 33, 34, 35, 36, 37, 38) can be used to determine the information sought with the request, wherein the computing unit (3) is designed, after determining the further application program (31, 32, 33, 34, 35, 36, 37, 38) or the function of the further application program (31, 32, 33, 34, 35, 36, 37, 38) which can determine the information sought, to transfer the request to the determined function or the determined application program (31, 32, 33, 34, 35, 36, 37, 38) and to then receive the information from the determined function or from the determined application program (31, 32, 33, 34, 35, 36, 37, 38).

7. Method for controlling and/or monitoring a technical installation (2) for producing and/or processing metal, using a computing system (3) with at least one interface (24, 25) for connection to at least one further computing system (4, 5, 6, 18) of the installation and/or to at least one sensor apparatus (11, 12, 13) of the installation (2) and/or to at least one man-machine interface (17) and/or to an application program (31, 32, 33, 34, 35, 36, 37, 38), wherein the computing system (3) receives a request for an item of information relating to the installation (2) from at least one requesting further computing system (4, 5, 6, 18) and/or from a requesting sensor apparatus (11, 12, 13) of the installation and/or from a requesting man-machine interface (17) and/or from an application program (31, 32, 33, 34, 35, 36, 37, 38) via the interface (24, 25), wherein the computing system (3) accesses a data model via the further computing system (4, 5, 6, 18) and/or the sensor apparatus (11, 12, 13) and/or the man-machine interface (17) and/or a further application program (31, 32, 33, 34, 35, 36, 37, 38), wherein the data model provides an indication of what information can be accessed by the further computing system (4, 5, 6, 18) and/or the sensor apparatus (11, 12, 13) and/or the man-machine interface (17) and/or the further application program (31, 32, 33, 34, 35, 36, 37, 38), wherein the computing system (3) determines, on the basis of the data model, the further computing system (4, 5, 6, 18) and/or the sensor apparatus (11, 12, 13) and/or the man-machine interface (17) and/or the further application program (31, 32, 33, 34, 35, 36, 37, 38) which can provide the information sought, wherein the computing system (3) obtains the requested information from the at least one determined further computing system (4, 5, 6, 18) and/or from the at least one determined sensor apparatus (11, 12, 13) and/or from the at least one determined man-machine interface (17) and/or from the at least one further application program (31, 32, 33, 34, 35, 36, 37, 38) via the interface (24, 25), wherein the computing system (3) outputs the obtained information to the requesting further computing system (4, 5, 6, 18) and/or to the requesting sensor apparatus (11, 12, 13) of the installation and/or to the requesting man-machine interface (17) and/or to the requesting application program (31, 32, 33, 34, 35, 36, 37, 38) via the interface (24, 25),
wherein the data model has, for the further computing systems (4, 5, 6, 18) and/or sensor apparatuses (11, 12, 13) and/or man-machine interfaces (17) and/or the further application programs (31, 32, 33, 34, 35, 36, 37, 38), stipulated examples of search requests which can be used to search for information in the further computing systems (4, 5, 6, 18) and/or the sensor apparatuses (11, 12, 13) and/or the man-machine interfaces (17), wherein the computing system (3) determines, by comparing the stipulated examples with the request, which further computing system (4, 5, 6, 18) and/or which sensor apparatus (11, 12, 13) and/or which man-machine interface (17) and/or which further application program (31, 32, 33, 34, 35, 36, 37, 38) can provide the information sought,
wherein the computing system (3) determines, on the basis of the data model, the probability of the further computing system (4, 5, 6, 18) and/or the sensor apparatus (11, 12, 13) and/or the man-machine interface (17) and/or the further application program (31, 32, 33, 34, 35, 36, 37, 38) being able to provide the information sought;
wherein the computing system forwards the request to the determined further computing system and/or to the determined sensor apparatus and/or to the determined man-machine interface and/or to the determined application program having the highest probability;
wherein the data model is embodied as a trained neural network, wherein the neural network is designed to determine the further computing system and/or the sensor apparatus and/or the man-machine interface and/or the application program which can provide the information sought with the request, wherein the neural network has been trained with predefined examples with the aid of a supervised learning method in order to determine, on the basis of a request, the further computing system and/or the sensor apparatus and/or the man-machine interface and/or the application program which can provide the information sought with the request, wherein the examples are similar or identical to the requests.

8. Method according to Claim 7, wherein the computing system determines an item of information sought by the request from an available request using a Natural Language Unit, NLU, program.

9. Method according to either of Claims 7 and 8, wherein the computing system receives, in response to a request for an item of information, a further request for a further item of information relating to the installation from the at least one determined further computing system (4, 5, 6, 18) and/or from the at least one determined sensor apparatus (11, 12, 13) and/or from the at least one determined man-machine interface (17) and/or at least one further application program (31, 32, 33, 34, 35, 36, 37, 38), wherein the computing system determines, on the basis of the further request with the aid of the data model, which further computing system (4, 5, 6, 18) and/or which sensor apparatus (11, 12, 13) and/or which man-machine interface (17) and/or which further application program (31, 32, 33, 34, 35, 36, 37, 38) can respond to the further request, wherein the computing system obtains the requested further information from the at least one determined further computing system (4, 5, 6, 18) and/or from the at least one determined sensor apparatus (11, 12, 13) and/or from the at least one determined man-machine interface (17) and/or from the at least one further application program (31, 32, 33, 34, 35, 36, 37, 38) via the interface (24, 25), wherein the computing system outputs the further information obtained to the requesting further computing system (4, 5, 6, 18) and/or to the requesting sensor apparatus (11, 12, 13) of the installation and/or to the requesting man-machine interface (17) and/or to the requesting application program (31, 32, 33, 34, 35, 36, 37, 38) via the interface (24, 25).

10. Method according to one of Claims 7 to 9, wherein the computing system obtains an item of stipulated information from at least one further computing system (4, 5, 6, 18) and/or a sensor apparatus (11, 12, 13) and/or a man-machine interface and/or the further application program (31, 32, 33, 34, 35, 36, 37, 38) via the interface (24) depending on at least one predefined operating state of the installation (2) and/or a predefined control value for the installation (2), wherein the computing system outputs the independently obtained information to a further computing system (4, 5, 6, 18) and/or to a sensor apparatus (11, 12, 13) and/or to the man-machine interface (17) and/or to the further application program (31, 32, 33, 34, 35, 36, 37, 38) via the interface (24).

11. Method according to one of Claims 7 to 10, wherein further computing systems (4, 5, 6, 18) for installation sections (21, 22, 23) of the installation (2) can be connected via the interface (24), wherein the computing system accesses documentation relating to installation sections (21, 22, 23) of the installation (2) via the interface (24) and searches for information in the documentation and outputs it to a further computing system (4, 5, 6, 18) and/or to a sensor apparatus (11, 12, 13) and/or to a man-machine interface (17) and/or to an application program (31, 32, 33, 34, 35, 36, 37, 38) via the interface,
wherein in particular the computing system determines at least one item of information relating to the installation (2) with the aid of a maintenance/operating program, outputs instructions via the interface, documents steps which have been carried out and/or intervenes in control of the installation (2).

## Revendications

1. Dispositif (1) permettant de commander et/ou de surveiller une installation technique (2) de production et/ou de traitement de métaux, comprenant un système informatique (3) avec au moins une interface (24, 25) permettant la connexion à au moins un système informatique (4, 5, 6, 18) supplémentaire de l'installation et/ou à au moins un dispositif de détection (11, 12, 13) de l'installation (2) et/ou à au moins une interface homme-machine (17) et/ou à un programme d'application (31, 32, 33, 34, 35, 36, 37, 38), dans lequel le système informatique (3) est conçu pour recevoir, par l'intermédiaire de l'interface (24, 25), une demande d'information sur l'installation (2) à partir d'au moins un système informatique (4, 5, 6, 18) supplémentaire demandeur et/ou d'un dispositif de détection (11, 12, 13) demandeur de l'installation et/ou d'une interface homme-machine (17) demandeuse et/ou d'un programme d'application (31, 32, 33, 34, 35, 36, 37, 38), dans lequel le système informatique (3) peut avoir accès à un modèle de données par l'intermédiaire du système informatique (4, 5, 6, 18) supplémentaire et/ou du dispositif de détection (11, 12, 13) et/ou de l'interface homme-machine (17) et/ou d'un programme d'application (31, 32, 33, 34, 35, 36, 37, 38) supplémentaire, dans lequel le modèle de données indique à quelles informations le système informatique (4, 5, 6, 18) supplémentaire et/ou le dispositif de détection (11, 12, 13) et/ou l'interface homme-machine (17) et/ou le programme d'application (31, 32, 33, 34, 35, 36, 37, 38) supplémentaire peuvent avoir accès, dans lequel le système informatique (3) est conçu pour déterminer, en se basant sur le modèle de données, le système informatique (4, 5, 6, 18) supplémentaire et/ou le dispositif de détection (11, 12, 13) et/ou l'interface homme-machine (17) et/ou le programme d'application (31, 32, 33, 34, 35, 36, 37, 38) supplémentaire qui peuvent fournir l'information recherchée, dans lequel le système informatique (3) est conçu pour récupérer, par l'intermédiaire de l'interface (24, 25), l'information demandée auprès du au moins un système informatique (4, 5, 6, 18) supplémentaire déterminé et/ou auprès du au moins un dispositif de détection (11, 12, 13) déterminé et/ou auprès de la au moins une interface homme-machine (17) déterminée et/ou auprès du au moins un programme d'application (31, 32, 33, 34, 35, 36, 37, 38) supplémentaire, dans lequel le système informatique (3) est conçu pour transmettre, par l'intermédiaire de l'interface (24, 25), l'information récupérée au système informatique (4, 5, 6, 18) supplémentaire demandeur et/ou au dispositif de détection (11, 12, 13) demandeur de l'installation et/ou à l'interface homme-machine (17) demandeuse et/ou au programme d'application (31, 32, 33, 34, 35, 36, 37, 38) demandeur,
dans lequel le modèle de données présente, pour les systèmes informatiques (4, 5, 6, 18) supplémentaires et/ou les dispositifs de détection (11, 12, 13) et/ou les interfaces homme-machine (17) et/ou les programmes d'application (31, 32, 33, 34, 35, 36, 37, 38) supplémentaires, des exemples définis de demandes de recherche avec lesquelles des informations peuvent être recherchées dans les systèmes informatiques (4, 5, 6, 18) supplémentaires et/ou les dispositifs de détection (11, 12, 13) et/ou les interfaces homme-machine (17),
dans lequel le système informatique (3) est conçu pour déterminer, en comparant les exemples définis avec la demande, quel système informatique (4, 5, 6, 18) supplémentaire et/ou quel dispositif de détection (11, 12, 13) et/ou quelle interface homme-machine (17) et/ou quel programme d'application (31, 32, 33, 34, 35, 36, 37, 38) supplémentaire peuvent fournir l'information recherchée, dans lequel le système informatique (3) est conçu pour déterminer, en se basant sur le modèle de données, avec quelle probabilité le système informatique (4, 5, 6, 18) supplémentaire et/ou le dispositif de détection (11, 12, 13) et/ou l'interface homme-machine (17) et/ou le programme d'application (31, 32, 33, 34, 35, 36, 37, 38) supplémentaire peuvent fournir l'information recherchée ; dans lequel le système informatique transmet la demande au système informatique supplémentaire déterminé et/ou au dispositif de détection déterminé et/ou à l'interface homme-machine déterminée et/ou au programme d'application déterminé qui présente la probabilité la plus élevée ; dans lequel le modèle de données est conçu comme un réseau de neurones entrainé,
dans lequel le réseau de neurones est conçu pour déterminer le système informatique supplémentaire et/ou le dispositif de détection et/ou l'interface homme-machine et/ou le programme d'application qui peuvent fournir l'information recherchée par la demande, dans lequel le réseau de neurones a été entrainé avec des exemples prédéfinis à l'aide d'un procédé d'apprentissage surveillé afin de déterminer, en se basant sur une demande, le système informatique supplémentaire et/ou le dispositif de détection et/ou l'interface homme-machine et/ou le programme d'application qui peuvent fournir l'information recherchée par la demande, dans lequel les exemples sont similaires ou identiques aux demandes.

2. Dispositif selon la revendication 1, dans lequel le système informatique est conçu pour déterminer, à partir d'une demande existante et par l'intermédiaire d'un programme de compréhension du langage naturel, NLU, une information recherchée par la demande.

3. Dispositif selon l'une quelconque des revendications précédentes, dans lequel le système informatique (3) est conçu pour recevoir, en réponse à une demande d'information du au moins un système informatique (4, 5, 6, 18) supplémentaire déterminé et/ou du au moins un dispositif de détection (11, 12, 13) déterminé et/ou de la au moins une interface homme-machine (17) déterminée et/ou du au moins un programme d'application (31, 32, 33, 34, 35, 36, 37, 38) supplémentaire, une demande supplémentaire d'information supplémentaire sur l'installation, dans lequel le système informatique (3) est conçu pour déterminer, en se basant sur la demande supplémentaire et à l'aide du modèle de données, quel système informatique (4, 5, 6, 18) supplémentaire et/ou quel dispositif de détection (11, 12, 13) et/ou quelle interface homme-machine (17) et/ou quel programme d'application (31, 32, 33, 34, 35, 36, 37, 38) supplémentaire peut répondre à la demande supplémentaire, dans lequel le système informatique (3) est conçu pour récupérer, par l'intermédiaire de l'interface (24, 25), l'information supplémentaire demandée auprès du au moins un système informatique (4, 5, 6, 18) supplémentaire déterminé et/ou auprès du au moins un dispositif de détection (11, 12, 13) déterminé et/ou auprès de la au moins une interface homme-machine (17) déterminée et/ou auprès du au moins un programme d'application (31, 32, 33, 34, 35, 36, 37, 38) supplémentaire, dans lequel le système informatique (3) est conçu pour transmettre, par l'intermédiaire de l'interface (24, 25), l'information supplémentaire récupérée au système informatique (4, 5, 6, 18) supplémentaire demandeur et/ou au dispositif de détection (11, 12, 13) demandeur de l'installation et/ou à l'interface homme-machine (17) demandeuse et/ou au programme d'application (31, 32, 33, 34, 35, 36, 37, 38) demandeur.

4. Dispositif selon l'une quelconque des revendications précédentes, dans lequel le système informatique (3) est conçu pour récupérer, par l'intermédiaire de l'interface (24) et en fonction d'au moins un état de fonctionnement prédéterminé de l'installation (2) et/ou d'une valeur de commande prédéterminée pour l'installation (2), une information spécifiée auprès d'au moins un système informatique (4, 5, 6, 18) supplémentaire et/ou d'un dispositif de détection (11, 12, 13) et/ou d'une interface homme-machine et/ou du programme d'application (31, 32, 33, 34, 35, 36, 37, 38) supplémentaire, dans lequel le système informatique (3) est conçu pour transmettre, par l'intermédiaire de l'interface (24), l'information récupérée de manière autonome à un système informatique (4, 5, 6, 18) supplémentaire et/ou à un dispositif de détection (11, 12, 13) et/ou à l'interface homme-machine (17) et/ou au programme d'application (31, 32, 33, 34, 35, 36, 37, 38) supplémentaire.

5. Dispositif selon l'une quelconque des revendications précédentes, dans lequel des systèmes informatiques (4, 5, 6, 18) supplémentaires destinés à des sous-installations (21, 22, 23) de l'installation (2) peuvent être connectés par l'intermédiaire de l'interface (24), dans lequel le système informatique (3) est conçu pour avoir accès, par l'intermédiaire de l'interface (24), à des documentations des sous-installations (21, 22, 23) de l'installation (2), pour rechercher des informations dans les documentations et pour les transmettre par l'intermédiaire de l'interface à un système informatique (4, 5, 6, 18) supplémentaire et/ou à un dispositif de détection (11, 12, 13) et/ou à une interface homme-machine (17) et/ou à un programme d'application (31, 32, 33, 34, 35, 36, 37, 38),
et/ou dans lequel le système informatique (3) est conçu pour déterminer au moins une information sur l'installation (2) à l'aide d'un programme de maintenance/d'exploitation, pour transmettre des instructions par l'intermédiaire de l'interface, pour documenter les étapes mises en œuvre et/ou pour intervenir dans la commande de l'installation (2).

6. Dispositif selon l'une quelconque des revendications précédentes, dans lequel le modèle de données présente un premier modèle de données prévu pour plusieurs systèmes informatiques (4, 5, 6, 18) supplémentaires et/ou des dispositifs de détection (11, 12, 13) et/ou des interfaces homme-machine (17) et/ou des programmes d'application (31, 32, 33, 34, 35, 36, 37, 38) supplémentaires, dans lequel l'unité informatique (3) est conçue pour déterminer, en se basant sur la demande et à l'aide du premier modèle de données, le au moins un système informatique (4, 5, 6, 18) supplémentaire et/ou le au moins un dispositif de détection (11, 12, 13) et/ou la au moins une interface homme-machine (17) et/ou le au moins un programme d'application (31, 32, 33, 34, 35, 36, 37, 38) supplémentaire qui peuvent fournir l'information recherchée par la demande, dans lequel le modèle de données présente au moins un deuxième modèle de données destiné à un système informatique (4, 5, 6, 18) supplémentaire ou à un dispositif de détection (11, 12, 13) ou à une interface homme-machine (17) ou à un programme d'application (31, 32, 33, 34, 35, 36, 37, 38) supplémentaire, dans lequel l'unité informatique (3) est conçue pour déterminer, en se basant sur le deuxième modèle de données, avec quel programme d'application (31, 32, 33, 34, 35, 36, 37, 38) du système informatique (4, 5, 6, 18) supplémentaire déterminé et/ou du dispositif de détection (11, 12, 13) déterminé et/ou de l'interface homme-machine (17) déterminée et/ou avec quelle fonction du programme d'application (31, 32, 33, 34, 35, 36, 37, 38) supplémentaire déterminé l'information recherchée par la demande peut être déterminée, dans lequel l'unité informatique (3) est conçue pour, après détermination du programme d'application (31, 32, 33, 34, 35, 36, 37, 38) supplémentaire ou de la fonction du programme d'application (31, 32, 33, 34, 35, 36, 37, 38) supplémentaire pouvant déterminer l'information recherchée, transmettre la demande à la fonction déterminée ou au programme d'application (31, 32, 33, 34, 35, 36, 37, 38) déterminé, puis recevoir l'information à partir de la fonction déterminée ou du programme d'application (31, 32, 33, 34, 35, 36, 37, 38) déterminé.

7. Procédé permettant de commander et/ou de surveiller une installation technique (2) de production et/ou de traitement de métaux, comprenant un système informatique (3) avec au moins une interface (24, 25) permettant la connexion à au moins un système informatique (4, 5, 6, 18) supplémentaire de l'installation et/ou à au moins un dispositif de détection (11, 12, 13) de l'installation (2) et/ou à au moins une interface homme-machine (17) et/ou à un programme d'application (31, 32, 33, 34, 35, 36, 37, 38), dans lequel le système informatique (3) reçoit, par l'intermédiaire de l'interface (24, 25), une demande d'information sur l'installation (2) à partir d'au moins un système informatique (4, 5, 6, 18) supplémentaire demandeur et/ou d'un dispositif de détection (11, 12, 13) demandeur de l'installation et/ou d'une interface homme-machine (17) demandeuse et/ou d'un programme d'application (31, 32, 33, 34, 35, 36, 37, 38), dans lequel le système informatique (3) a accès à un modèle de données par l'intermédiaire du système informatique (4, 5, 6, 18) supplémentaire et/ou du dispositif de détection (11, 12, 13) et/ou de l'interface homme-machine (17) et/ou d'un programme d'application (31, 32, 33, 34, 35, 36, 37, 38) supplémentaire, dans lequel le modèle de données indique à quelles informations le système informatique (4, 5, 6, 18) supplémentaire et/ou le dispositif de détection (11, 12, 13) et/ou l'interface homme-machine (17) et/ou le programme d'application (31, 32, 33, 34, 35, 36, 37, 38) supplémentaire peuvent avoir accès, dans lequel le système informatique (3) détermine, en se basant sur le modèle de données, le système informatique (4, 5, 6, 18) supplémentaire et/ou le dispositif de détection (11, 12, 13) et/ou l'interface homme-machine (17) et/ou le programme d'application (31, 32, 33, 34, 35, 36, 37, 38) supplémentaire qui peuvent fournir l'information recherchée, dans lequel le système informatique (3) récupère, par l'intermédiaire de l'interface (24, 25), l'information demandée auprès du au moins un système informatique (4, 5, 6, 18) supplémentaire déterminé et/ou auprès du au moins un dispositif de détection (11, 12, 13) déterminé et/ou auprès de la au moins une interface homme-machine (17) déterminée et/ou auprès du au moins un programme d'application (31, 32, 33, 34, 35, 36, 37, 38) supplémentaire, dans lequel le système informatique (3) transmet, par l'intermédiaire de l'interface (24, 25), l'information récupérée au système informatique (4, 5, 6, 18) supplémentaire demandeur et/ou au dispositif de détection (11, 12, 13) demandeur de l'installation et/ou à l'interface homme-machine (17) demandeuse et/ou au programme d'application (31, 32, 33, 34, 35, 36, 37, 38) demandeur,
dans lequel le modèle de données destiné aux systèmes informatiques (4, 5, 6, 18) supplémentaires et/ou aux dispositifs de détection (11, 12, 13) et/ou aux interfaces homme-machine (17) et/ou aux programmes d'application (31, 32, 33, 34, 35, 36, 37, 38) supplémentaires présente des exemples définis de demandes de recherche avec lesquelles des informations peuvent être recherchées dans les systèmes informatiques (4, 5, 6, 18) supplémentaires et/ou les dispositifs de détection (11, 12, 13) et/ou les interfaces homme-machine (17), dans lequel le système informatique (3) détermine, en comparant les exemples définis avec la demande, quel système informatique (4, 5, 6, 18) supplémentaire et/ou quel dispositif de détection (11, 12, 13) et/ou quelle interface homme-machine (17) et/ou quel programme d'application (31, 32, 33, 34, 35, 36, 37, 38) supplémentaire peuvent fournir l'information recherchée, dans lequel le système informatique (3) détermine, en se basant sur le modèle de données, avec quelle probabilité le système informatique (4, 5, 6, 18) supplémentaire et/ou le dispositif de détection (11, 12, 13) et/ou l'interface homme-machine (17) et/ou le programme d'application (31, 32, 33, 34, 35, 36, 37, 38) supplémentaire peuvent fournir l'information recherchée ;
dans lequel le système informatique transmet la demande au système informatique supplémentaire déterminé et/ou au dispositif de détection déterminé et/ou à l'interface homme-machine déterminée et/ou au programme d'application déterminé qui présente la probabilité la plus élevée ;
dans lequel le modèle de données est conçu comme un réseau de neurones entrainé,
dans lequel le réseau de neurones est conçu pour déterminer le système informatique supplémentaire et/ou le dispositif de détection et/ou l'interface homme-machine et/ou le programme d'application qui peuvent fournir l'information recherchée par la demande, dans lequel le réseau de neurones a été entrainé avec des exemples prédéfinis à l'aide d'un procédé d'apprentissage surveillé afin de déterminer, en se basant sur une demande, le système informatique supplémentaire et/ou le dispositif de détection et/ou l'interface homme-machine et/ou le programme d'application qui peuvent fournir l'information recherchée par la demande, dans lequel les exemples sont similaires ou identiques aux demandes.

8. Procédé selon la revendication 7, dans lequel le système informatique détermine, à partir d'une demande existante et par l'intermédiaire d'un programme de compréhension du langage naturel, NLU, une information recherchée par la demande.

9. Procédé selon l'une quelconque des revendications 7 ou 8, dans lequel le système informatique reçoit, en réponse à une demande d'information provenant du au moins un système informatique (4, 5, 6, 18) supplémentaire déterminé et/ou du au moins un dispositif de détection (11, 12, 13) déterminé et/ou de la au moins une interface homme-machine (17) déterminée et/ou du au moins un programme d'application (31, 32, 33, 34, 35, 36, 37, 38) supplémentaire, une demande supplémentaire d'information supplémentaire sur l'installation, dans lequel le système informatique détermine, en se basant sur la demande supplémentaire et à l'aide du modèle de données, quel système informatique (4, 5, 6, 18) supplémentaire et/ou quel dispositif de détection (11, 12, 13) et/ou quelle interface homme-machine (17) et/ou quel programme d'application (31, 32, 33, 34, 35, 36, 37, 38) supplémentaire peuvent répondre à la demande supplémentaire, dans lequel le système informatique récupère, par l'intermédiaire de l'interface (24, 25), l'information supplémentaire demandée auprès du au moins un système informatique (4, 5, 6, 18) supplémentaire déterminé et/ou auprès du au moins un dispositif de détection (11, 12, 13) déterminé et/ou auprès de la au moins une interface homme-machine (17) déterminée et/ou auprès du au moins un programme d'application (31, 32, 33, 34, 35, 36, 37, 38) supplémentaire, dans lequel le système informatique transmet, par l'intermédiaire de l'interface (24, 25), l'information supplémentaire récupérée au système informatique (4, 5, 6, 18) supplémentaire demandeur et/ou au dispositif de détection (11, 12, 13) demandeur de l'installation et/ou à l'interface homme-machine (17) demandeuse et/ou au programme d'application (31, 32, 33, 34, 35, 36, 37, 38) demandeur.

10. Procédé selon l'une quelconque des revendications 7 à 9, dans lequel le système informatique récupère, par l'intermédiaire de l'interface (24) et en fonction d'au moins un état de fonctionnement prédéterminé de l'installation (2) et/ou d'une valeur de commande prédéterminée pour l'installation (2), une information spécifiée auprès d'au moins un système informatique (4, 5, 6, 18) supplémentaire et/ou d'un dispositif de détection (11, 12, 13) et/ou d'une interface homme-machine et/ou du programme d'application (31, 32, 33, 34, 35, 36, 37, 38) supplémentaire, dans lequel le système informatique transmet, par l'intermédiaire de l'interface (24), l'information récupérée de manière autonome à un système informatique (4, 5, 6, 18) supplémentaire et/ou à un dispositif de détection (11, 12, 13) et/ou à l'interface homme-machine (17) et/ou au programme d'application (31, 32, 33, 34, 35, 36, 37, 38) supplémentaire.

11. Procédé selon l'une quelconque des revendications 7 à 10, dans lequel des systèmes informatiques (4, 5, 6, 18) supplémentaires destinés à des sous-installations (21, 22, 23) de l'installation (2) peuvent être connectés par l'intermédiaire de l'interface (24), dans lequel le système informatique a accès à des documentations de sous-installations (21, 22, 23) de l'installation (2) par l'intermédiaire de l'interface (24) et recherche des informations dans les documentations et les transmet, par l'intermédiaire de l'interface, à un système informatique (4, 5, 6, 18) supplémentaire et/ou à un dispositif de détection (11, 12, 13) et/ou à une interface homme-machine (17) et/ou à un programme d'application (31, 32, 33, 34, 35, 36, 37, 38), dans lequel le système informatique détermine en particulier au moins une information sur l'installation (2) à l'aide d'un programme de maintenance/exploitation, transmet des instructions par l'intermédiaire de l'interface, documente les étapes mises en œuvre et/ou intervient dans la commande de l'installation (2).
